# EUROPEAN PATENT SPECIFICATION

(11) **EP 2 477 138 B1**
(45) Date of publication and mention of the grant of the patent: **11.03.2015**
(21) Application number: 12151007.7
(22) Date of filing: 12.01.2012
(51) Int. Cl.: G06K 7/10, G06F 9/40

(54) **Digital image capture and processing system supporting multiple third party code plug-ins with configuration files having conditional programming logic controlling the chaining of multiple third-party plug-ins**
Digitale Bilderfassung und Verarbeitungssystem zur Unterstützung mehrerer Code-Plugins von Drittanbietern mit Konfigurationsdateien, welche eine bedingte Programmierlogik aufweisen, um die Verkettung von mehreren Plugins von Drittanbietern zu steuern
Capture d'images numériques et système de traitement prenant en charge les modules d'extension de plusieurs codes tiers avec des fichiers de configuration dotés d'une logique de programmation contrôlant le chaînage de plusieurs modules d'extension tiers

(30) Priority: 18.01.2011 US 201113008215
(43) Date of publication of application: 18.07.2012
(73) Proprietor: Metrologic Instruments, Inc., Blackwood, NJ 08012 (US)
(72) Inventor: Smith, Taylor, Morristown, NJ New Jersey 07962-2245 (US); Pankow, Matthew, Morristown, NJ New Jersey 07962-2245 (US); Fiutak, Melissa, Morristown, NJ New Jersey 07962-2245 (US); Zhu, Xiaoxun, Morristown, NJ New Jersey 07962-2245 (US)
(74) Representative: Buckley, Guy Julian

(56) References cited:
- Google Inc.: "nexus one User's Guide", , 15 October 2010 (2010-10-15), XP55024684, Retrieved from the Internet: URL:http://support.t-mobile.com/servlet/Ji veServlet/previewBody/1938-102-1-2590/User manual - Google Nexus One.pdf [retrieved on 2012-04-17]

## Description

### BACKGROUND

### Field Of Disclosure

The present disclosure relates to hand-supportable and portable area-type digital bar code readers having diverse modes of digital image processing for reading one-dimensional (1D) and two-dimensional (2D) bar code symbols, and improved methods of modifying and extending system features and functionalities.

### Brief Description Of The State Of The Art

The state of the automatic-identification industry can be understood in terms of (i) the different classes of bar code symbologies that have been developed and adopted by the industry, and (ii) the kinds of apparatus developed and used to read such bar code symbologies in various user environments.

In general, there are currently three major classes of bar code symbologies, namely: one dimensional (1D) bar code symbologies, such as UPC/EAN, Code 39, etc.; 1D stacked bar code symbologies, Code 49, PDF417, etc.; and two-dimensional (2D) data matrix symbologies. Also, laser scanning based bar code symbol readers and imaging-based bar code symbol readers have been developed over the years to meet the bar code symbol reading needs of the industry.

Imaging-based bar code symbol readers have a number advantages over laser scanning based bar code symbol readers, namely: they are more capable of reading stacked 2D symbologies, such as the PDF 417 symbology; more capable of reading matrix 2D symbologies, such as the Data Matrix symbology; more capable of reading bar codes regardless of their orientation; have lower manufacturing costs; and have the potential for use in other applications, which may or may not be related to bar code scanning, such as OCR, security systems, etc However, prior art imaging-based bar code symbol readers suffer from a number of additional shortcomings and drawbacks.

Most prior art hand held optical reading devices can be reprogrammed by reading bar codes from a bar code programming menu or with use of a local host processor as taught in US Patent No. 5,929,418. However, these devices are generally constrained to operate within the modes in which they have been programmed to operate, either in the field or on the bench, before deployment to end-user application environments. Consequently, the statically-configured nature of such prior art imaging-based bar code reading systems has limited their performance as well as capacity for easy integration into third-party products (i.e. systems and devices).

A prior art disclosure of a digital image capture and processing system having a set of standard features and functions and a set of custom features and functions can be found in Google Inc: "Nexus One User's Guide", 15 October 2010, XP 55024684, URL:http://support.t-mobile.com/JiveServlet/PreviewBody/ 1938-102-1-2590/User manual - Google Nexus One.pdf.

Prior art imaging-based bar code symbol readers generally require the use of tables and bar code menus to manage which decoding algorithms are to be used within any particular mode of system operation to be programmed by reading bar code symbols from a bar code menu.

Also, due to the complexity of the hardware platforms of such prior art imaging-based bar code symbol readers, end-users are not permitted to modify the features and functionalities of such system to their customized application requirements, other than changing limited functions within the system by reading system-programming type bar code symbols, as disclosed in US Patent Nos. 6,321,989; 5,965,863; 5,929,418; and 5,932,862.

Also, dedicated image-processing based bar code symbol reading devices usually have very limited resources, such as the amount of volatile and non-volatile memories. Therefore, they usually do not have a rich set of tools normally available to universal computer systems. Further, if a customer or a third-party needs to enhance or alter the behavior of a conventional image-processing based bar code symbol reading system or device, they need to contact the device manufacturer and negotiate the necessary changes in the "standard" software or the ways to integrate their own software into the device, which usually involves the re-design or re-compilation of the software by the original equipment manufacturer (OEM). This software modification process is both costly and time consuming.

Also, as a result of limitations in the mechanical, electrical, optical, and software design of prior art imaging-based bar code symbol readers, such prior art readers generally: (i) fail to enable users to read high-density 1D bar codes with the ease and simplicity of laser scanning based bar code symbol readers and also 2D symbologies, such as PDF 417 and Data Matrix, and (iii) have not enabled end-users to modify the features and functionalities of such prior art systems without detailed knowledge about the hard-ware platform, communication interfaces and the user interfaces of such systems.

Thus, there is a great need in the art for an improved method of and apparatus for modifying and extending the functionalities of digital imaging based code symbol reading systems, including digital imaging modules, which avoid the shortcomings and drawbacks of prior art methods and apparatus.

### OBJECTS AND SUMMARY

The present invention in its various aspects is as set out in the appended claims. Accordingly, a primary object of the present disclosure is to provide a novel digital image capture and processing system permitting modification of system features and functionalities by way of third party code plug-ins, in ways which avoid the shortcomings and drawbacks of prior art methods and apparatus.

Another object of the present disclosure is to provide such a digital image capture and processing system that allows customers, VARs and third parties to modify and/or extend a set of standard features and functions of the system without needing to contact the system's OEM and negotiate ways of integrating their desired enhancements to the system.

Another object of the present disclosure is to provide such an image capture and processing system that allows customers, VARs and third parties to independently design their own software according to the OEM specifications, and plug this software into the system, thereby effectively changing the device's behavior, without detailed knowledge about the hardware platform of the system, its communications with outside environment, and user-related interfaces

Another object of the present disclosure is to provide a customer of the such a digital image capture and processing system, or any third-party thereof, with a way of and means for enhancing or altering the behavior of the system without interfering with underlying hardware, communications and user-related interfaces.

Another object of the present disclosure is to provide end-users of such a digital image capture and processing system, as well as third-parties, with a way of and means for designing, developing, and installing in the device, their own plug-in modules without a need for knowledge of details of the device's hardware.

Another object of the present disclosure is to provide original equipment manufacturers (OEM) with a way of and means for installing the OEM's plug-in modules into a digital image capture and processing system, without knowledge of the third-party's plug-in (software) modules that have been installed therein, provided established specifications for system features and functionalities for the third-party plug-ins are met.

Another object of the present disclosure is to provide customers of a digital image capture and processing system, and third-parties thereof, with a way of and means for installing their own plug-in modules to enhance or alter the "standard" behavior of the device according to their own needs and independently from each other.

Another object of the present invention is to provide a modular software development platform designed specifically for digital image capture and processing systems, where software plug-ins (e.g. applications) can be developed and maintained independent of the firmware of the system.

Another object of the present invention is to provide such a modular software development platform for digital image capture and processing systems, allowing third-parties and customers to install and run multiple plug-ins (e.g. applications) in conjunction with one another, on the digital image capture and processing system, so as to further improve the usefulness and/or performance of the system in diverse application environments.

Another object of the present invention is to provide a novel digital image capture and processing system, wherein multiple third-party plug-ins of the same type can be programmed at the application layer by third-parties, and wherein the configuration file that controls (i.e. conditions) the multiple third-party plug-ins includes conditional programming logic that chains (i.e. orders the multiple third-party plug-ins so that the customer can enable interaction and configuration between multiple plug-ins, and achieve enhanced system functionality.

Another object of the present invention is to provide a digital image capture and processing system that can be used for bar code symbol reading, pattern recognition (non-barcode), mark recognition (non-barcode), unique font recognition, advanced formatting/parsing of long data strings commonly found in 2D bar codes, encryption/decryption for enhanced security, and the like.

Another object of the present disclosure is to provide an image capture and processing system that supports designer/manufacturer-constrained system behavior modification, without requiring detailed knowledge about the hardware platform of the system, its communications with outside environment, and user-related interfaces.

Another object of the present disclosure is to provide a novel hand-supportable digital imaging-based bar code symbol reader capable of automatically reading 1D and 2D bar code symbologies using the state-of-the art imaging technology, and at the speed and with the reliability achieved by conventional laser scanning bar code symbol readers.

These and other objects of the present disclosure will become more apparently understood hereinafter and in the claims appended hereto.

### BRIEF DESCRIPTION OF THE DRAWINGS

For a more complete understanding of how to practice the Objects of the Present Disclosure, the following Detailed Description of the Illustrative Embodiments can be read in conjunction with the accompanying Drawings, briefly described below:
Fig. 1A is a schematic representation of a digital image capture and processing system of the present disclosure, employing a multi-tier software system architecture capable of supporting various subsystems providing numerous standard system features and functions that can be modified and/or extended using the innovative plug-in programming methods of the present disclosure;
Fig. 1B is a schematic representation of the system architecture of the a digital image capture and processing system of the present disclosure, represented in Fig. 1A;
Figs. 1C1 through 1C3, taken together, sets forth a table indicating the features and functions supported by each of the subsystems provided in the system architecture of the a digital image capture and processing system of the present disclosure, represented in Figs. 1A and 1B;
Fig. 1D is a schematic representation indicating that the digital image capture and processing system of the present disclosure, shown in Figs. 1A through 1C3, can be implemented using a digital camera board and a printed circuit (PC) board that are interfaced together;
Fig. 1E is a schematic representation indicating that the digital image capture and processing system of the present disclosure, shown in Figs. 1A through 1C3, can be implemented using a single hybrid digital camera/PC board;

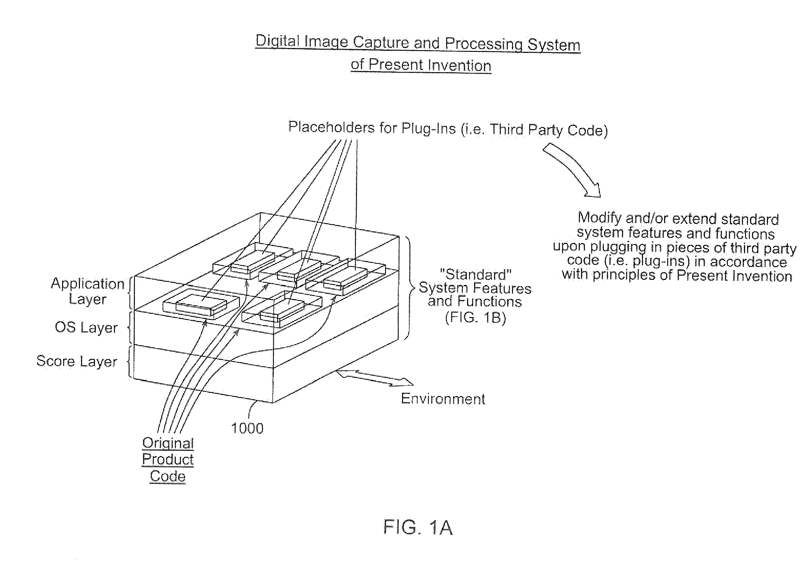

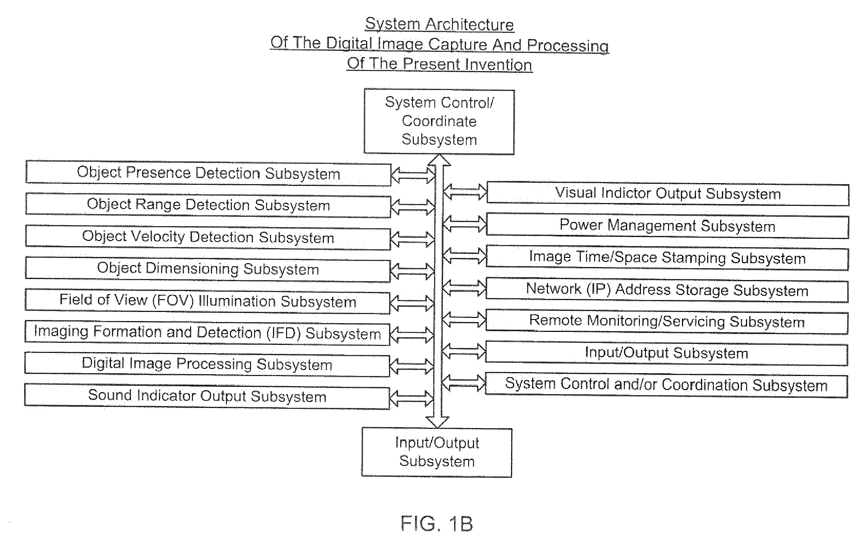

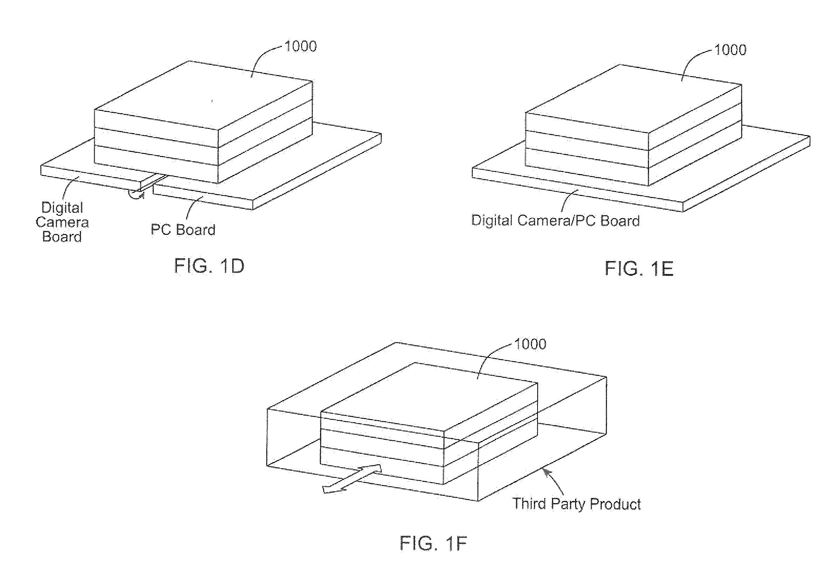

Fig. 1F is a schematic representation illustrating that the digital image capture and processing system of the present disclosure, shown in Figs. 1A through 1E, can be integrated or embodied within third-party products, such as, for example, but not limited to digital image-processing based bar code symbol reading systems, OCR systems, object recognition systems, portable data terminals (PDTs), mobile phones, computer mice-type devices, personal computers, keyboards, consumer appliances, automobiles, ATMs, vending machines, reverse-vending machines, retail POS-based transaction systems, 2D or 2D digitizers, and CAT scanning systems, automobile identification systems, package inspection systems, personal identification systems and the like;
Fig. 2A is a rear perspective view of the hand-supportable digital imaging-based bar code symbol reading device of the first illustrative embodiment of the present disclosure;
Fig. 2B is a front perspective view of the hand-supportable digital imaging-based bar code symbol reading device of the first illustrative embodiment of the present disclosure;
Fig. 2C is an elevated left side view of the hand-supportable digital imaging-based bar code symbol reading device of the first illustrative embodiment of the present disclosure;
Fig. 2D is an elevated right side view of the hand-supportable digital imaging-based bar code symbol reading device of the first illustrative embodiment of the present disclosure;
Fig. 2E is an elevated rear view of the hand-supportable digital imaging-based bar code symbol reading device of the first illustrative embodiment of the present disclosure;
Fig. 2F is an elevated front view of the hand-supportable digital imaging-based bar code symbol reading device of the first illustrative embodiment of the present disclosure, showing components associated with its illumination subsystem and its image capturing subsystem;
Fig. 2G is a bottom view of the hand-supportable digital imaging-based bar code symbol reading device of the first illustrative embodiment of the present disclosure;
Fig. 2H is a top rear view of the hand-supportable digital imaging-based bar code symbol reading device of the first illustrative embodiment of the present disclosure;
Fig. 2I is a first perspective exploded view of the hand-supportable digital imaging-based bar code symbol reading device of the first illustrative embodiment of the present disclosure;
Fig. 2J is a second perspective exploded view of the hand-supportable digital imaging-based bar code symbol reading device of the first illustrative embodiment of the present disclosure;
Fig. 2K is a third perspective exploded view of the hand-supportable digital imaging-based bar code symbol reading device of the first illustrative embodiment of the present disclosure;
Fig. 2L1 is a schematic block diagram representative of a system design for the hand-supportable digital imaging-based bar code symbol reading device illustrated in Figs. 2A through 2K;

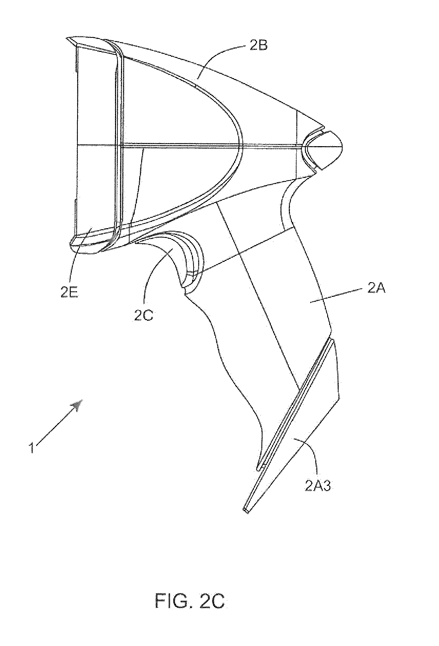

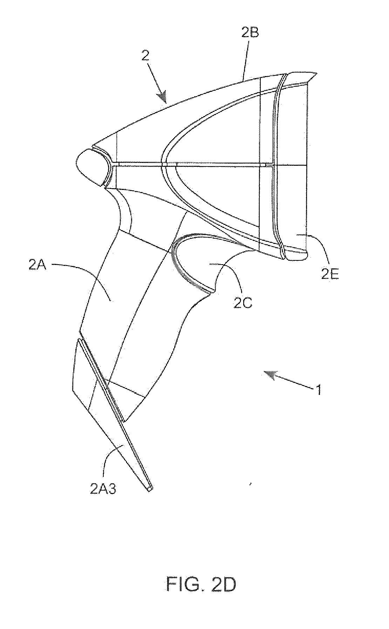

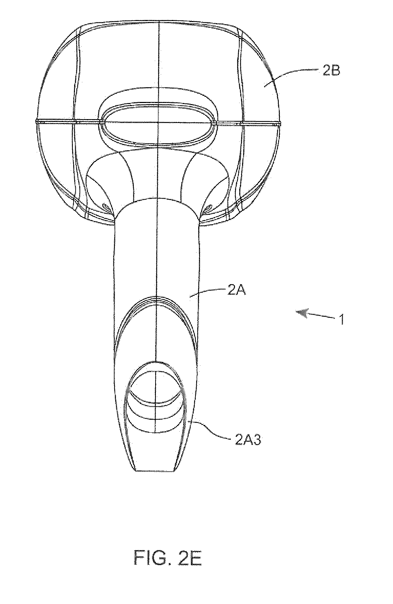

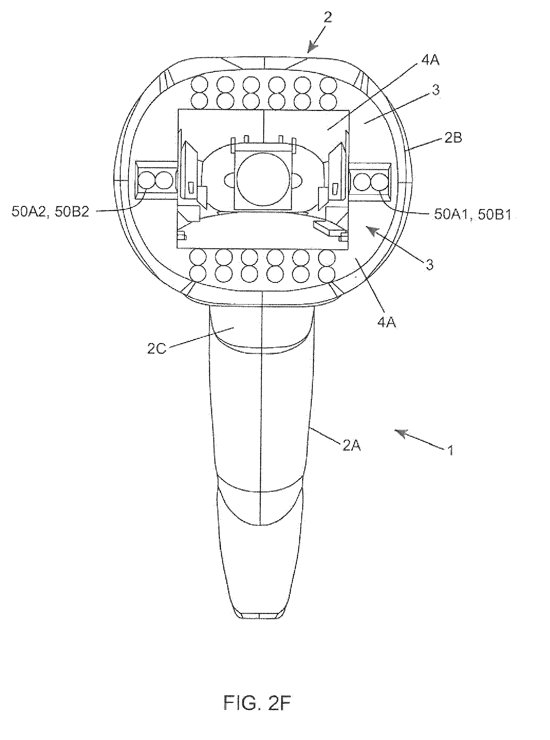

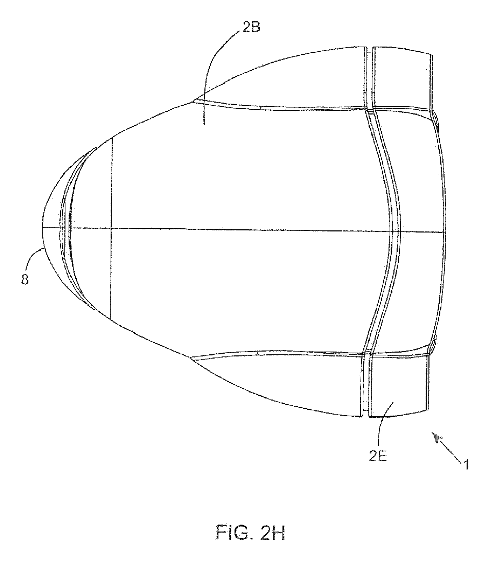

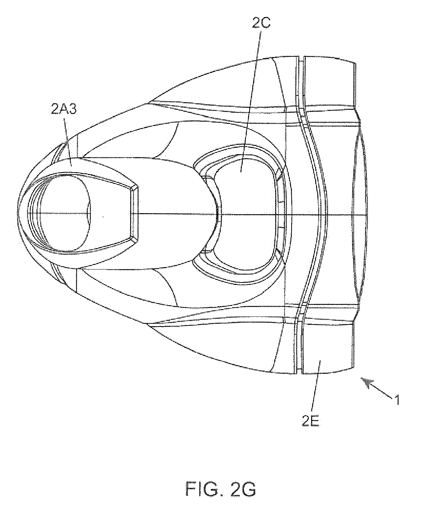

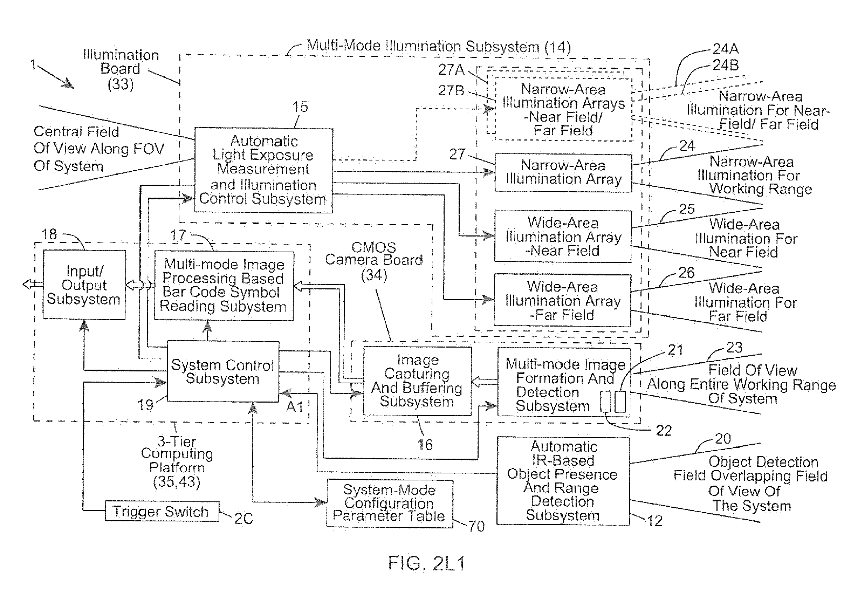

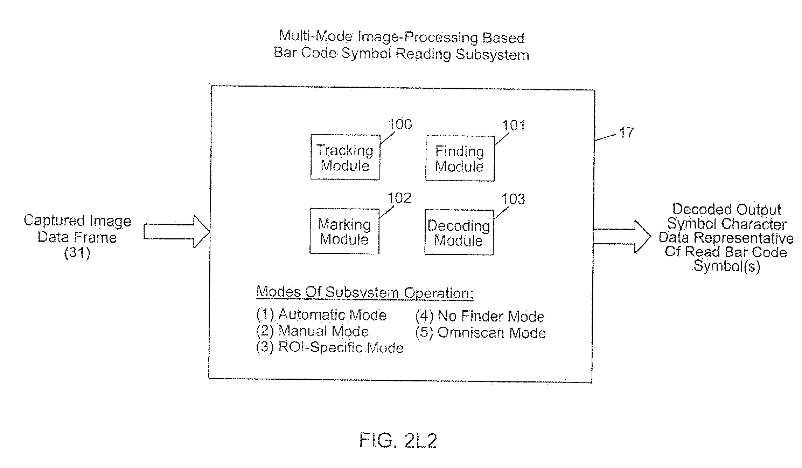

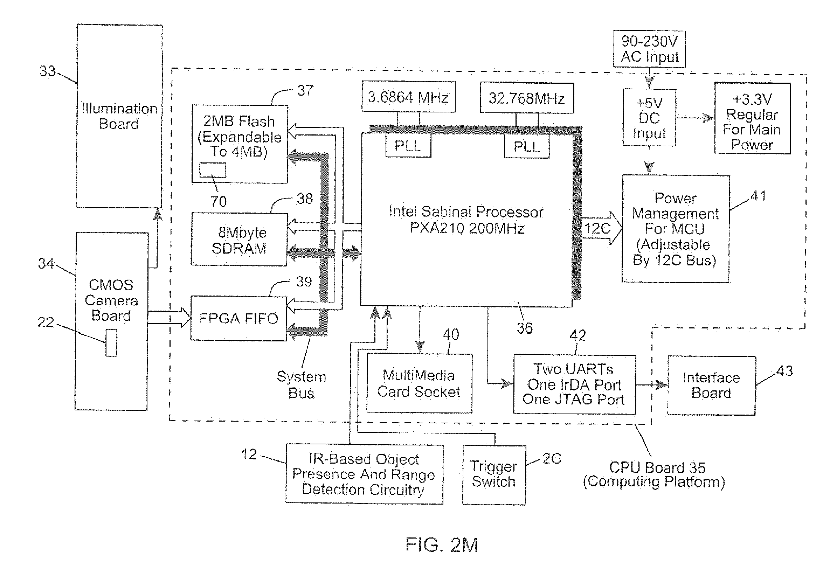

Fig. 2L2 is a schematic block representation of the Multi-Mode Image-Processing Based Bar Code Symbol Reading Subsystem, realized using the three-tier computing platform illustrated in Fig. 2M;

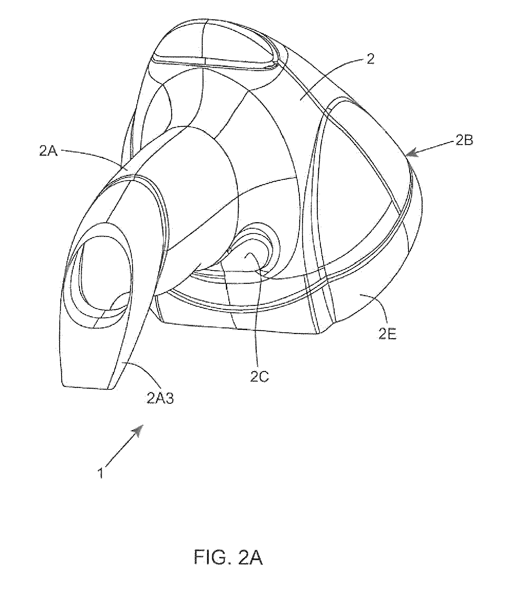

Fig. 2M is a schematic diagram representative of a system implementation for the hand-supportable digital imaging-based bar code symbol reading device illustrated in Figs. 2A through 2L2;

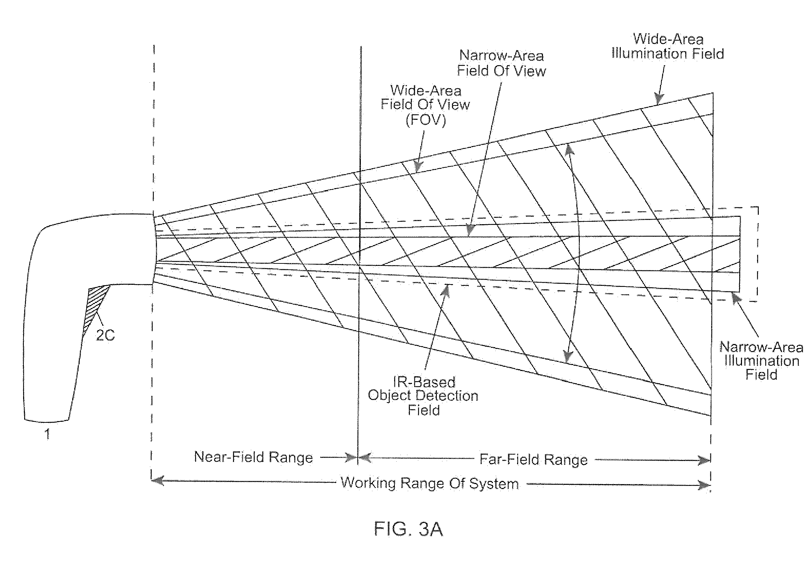

Fig. 3A is a schematic representation showing the spatial relationships between the near and far and narrow and wide area fields of narrow-band illumination within the FOV of the Multi-Mode Image Formation and Detection Subsystem during narrow and wide area image capture modes of operation;#

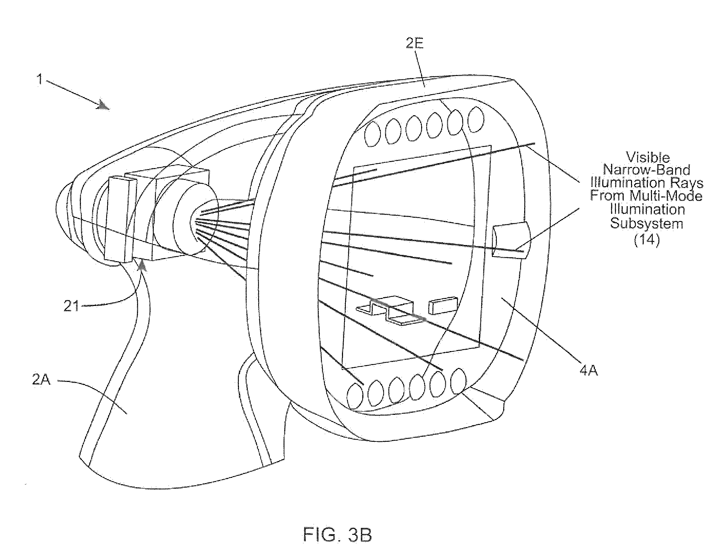

Fig. 3B is a perspective partially cut-away view of the hand-supportable digital imaging-based bar code symbol reading device of the first illustrative embodiment, showing the LED-Based Multi-Mode Illumination Subsystem transmitting visible narrow-band illumination through its narrow-band transmission-type optical filter system and illuminating an object with such narrow-band illumination, and also showing the image formation optics, including the low pass filter before the image sensing array, for collecting and focusing light rays reflected from the illuminated object, so that an image of the object is formed and detected using only the optical components of light contained within the narrow-band of illumination, while all other components of ambient light are substantially rejected before image detection at the image sensing array;

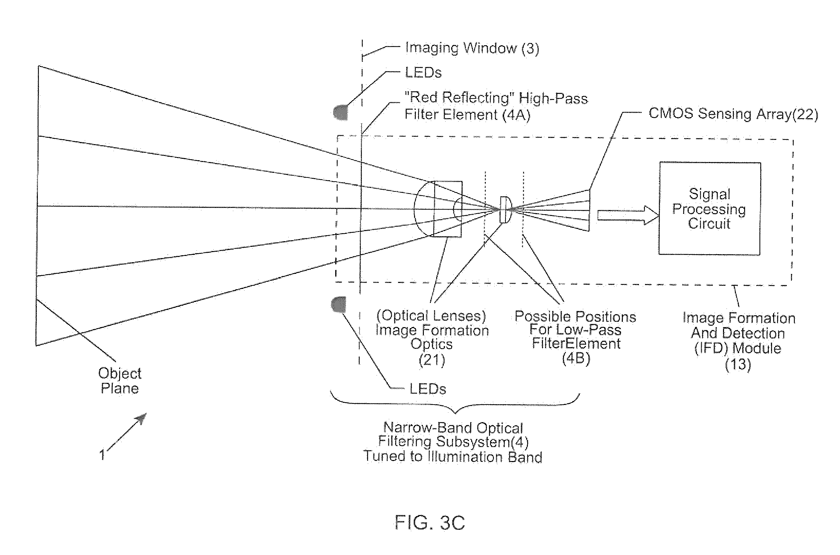

Fig. 3C is a schematic representation showing the geometrical layout of the optical components used within the hand-supportable digital imaging-based bar code symbol reading device of the first illustrative embodiment, wherein the red-wavelength reflecting high-pass lens element is positioned at the imaging window of the device before the image formation lens elements, while the low-pass filter is disposed before the image sensor of between the image formation elements, so as to image the object at the image sensing array using only optical components within the narrow-band of illumination, while rejecting all other components of ambient light;

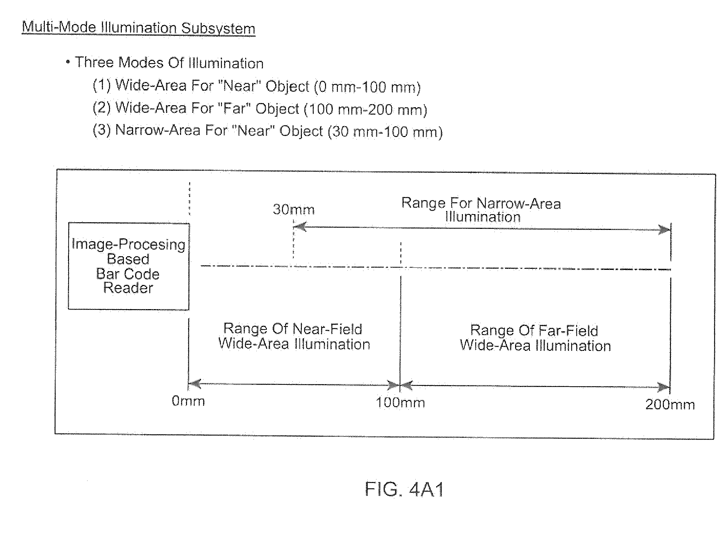

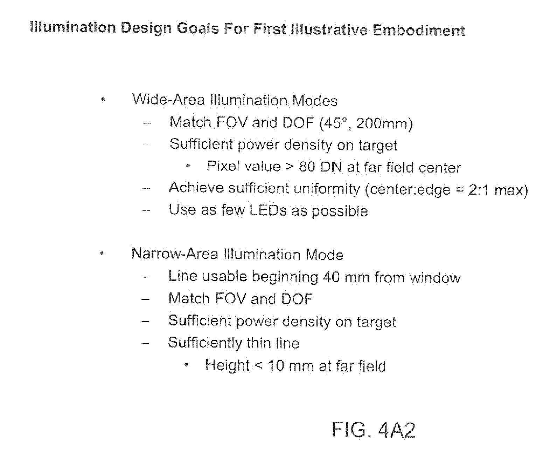

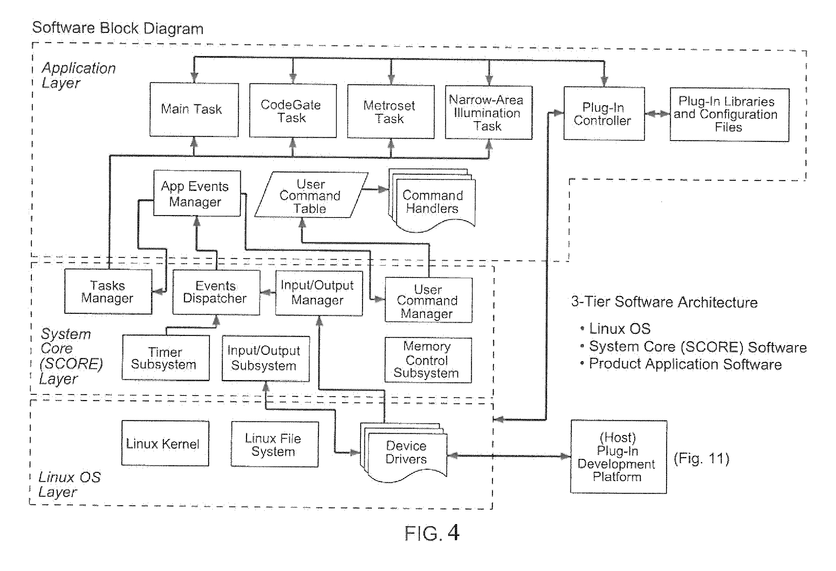

Fig. 4A1 is a schematic representation specifying the range of narrow-area illumination, near-field wide-area illumination, and far-field wide-area illumination produced from the LED-Based Multi-Mode Illumination Subsystem employed in the hand-supportable digital imaging-based bar code symbol reading device of the present disclosure;
Fig. 4A2 is a table specifying the geometrical properties and characteristics of each illumination mode supported by the LED-Based Multi-Mode Illumination Subsystem employed in the hand-supportable digital imaging-based bar code symbol reading device of the present disclosure;
Fig. 4 is a schematic representation showing the software modules associated with the three-tier software architecture of the hand-supportable digital imaging-based bar code symbol reading device of the present disclosure, namely: the Main Task module, the CodeGate Task module, the Narrow-Area Illumination Task module, the Metroset Task module, the Application Events Manager module, the User Commands Table module, the Command Handler module, Plug-In Controller, and Plug-In Libraries and Configuration Files, all residing within the Application layer of the software architecture; the Tasks Manager module, the Events Dispatcher module, the Input/Output Manager module, the User Commands Manager module, the Timer Subsystem module, the Input/Output Subsystem module and the Memory Control Subsystem module residing with the System Core (SCORE) layer of the software architecture; and the Linux Kernal module in operable communication with the Plug-In Controller, the Linux File System module, and Device Drivers modules residing within the Linux Operating System (OS) layer of the software architecture, and in operable communication with an external (host0 Plug-In Development Platform via standard or proprietary communication interfaces;

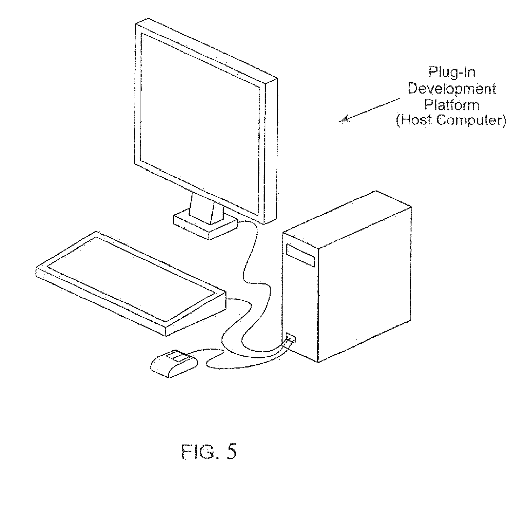

Fig. 5 is a perspective view of an illustrative embodiment of a computer software development platform for developing plug-ins for tasks within the application layer of the imaging-based bar code reading system of the present disclosure;

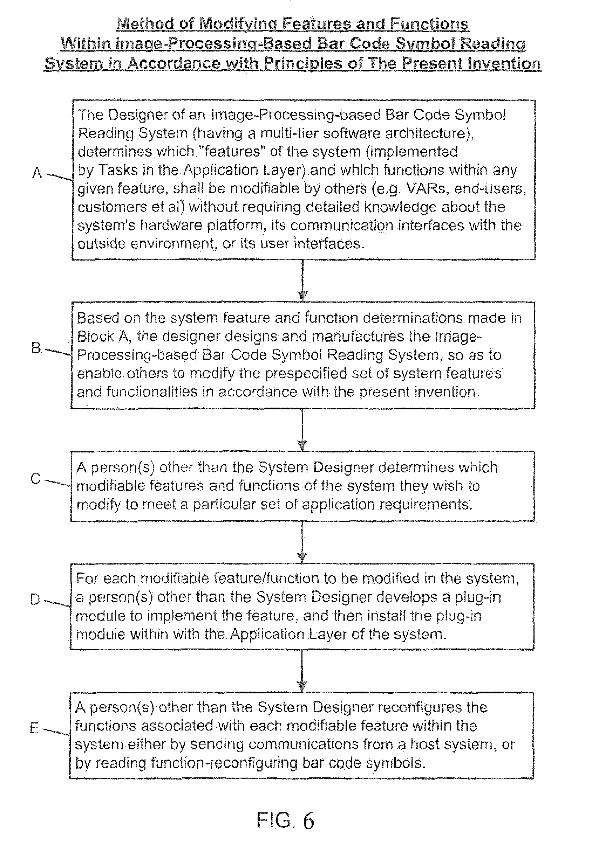

Fig. 6 is a high-level flow chart illustrating the steps involving carrying out the method of the present disclosure, wherein the system behavior (i.e. features) of the imaging-based bar code symbol reading system of the present disclosure can be modified by the end-user, within a set of manufacturer-defined constraints (i.e. imposed on modifiable features and functions within features), by the end-user developing, installing/deploying and configuring "plug-in modules" (i.e. libraries) for any modifiable task within the Application Layer of the system, so as to allow the end user to flexible modify and/or extend standard (i.e. prespecified) features and functionalities of the system, and thus satisfy customized end-user application requirements, but without requiring detailed knowledge about the hardware platform of the system, its communication with the environment, and/or its user interfaces.

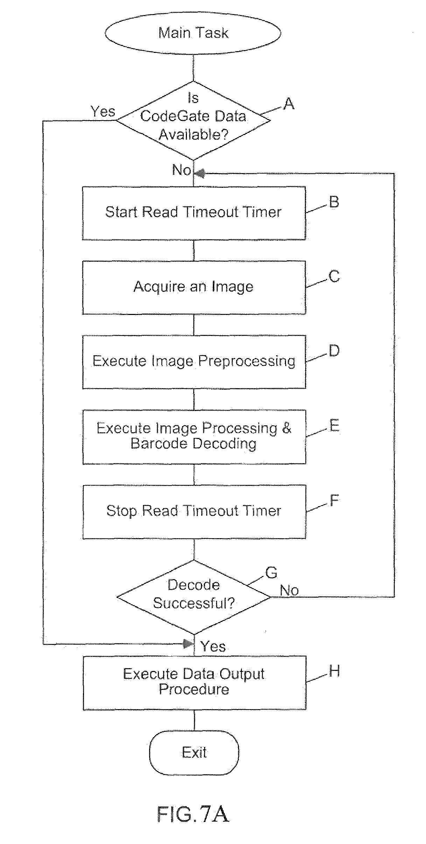

Fig. 7A is an exemplary flow chart representation showing what operations are carried out when the "Modifiable" Main Task is (enabled and) executed within the Application Layer of the system;

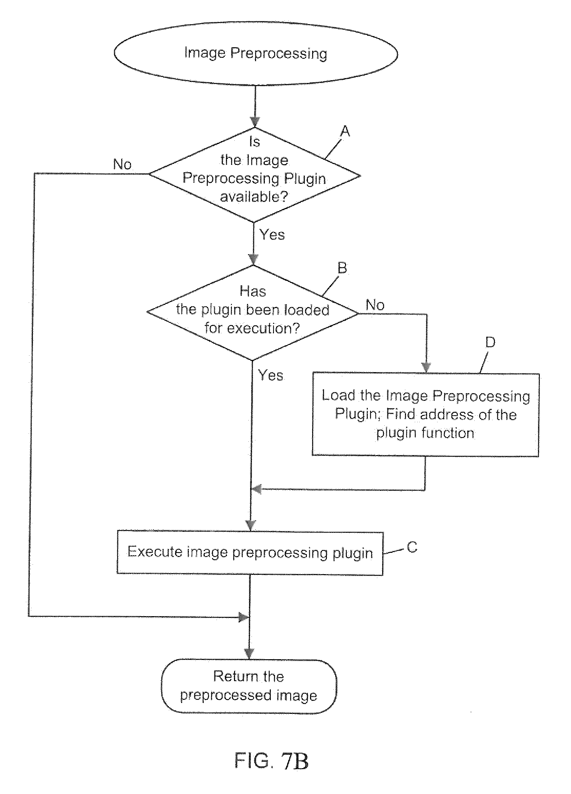

Fig. 7B is an exemplary flow chart representation showing what operations are carried out when the system feature called "Image Preprocessing" is executed within the Image-Processing Based Bar Code Symbol Reading Subsystem software module in the Application Layer of the system;

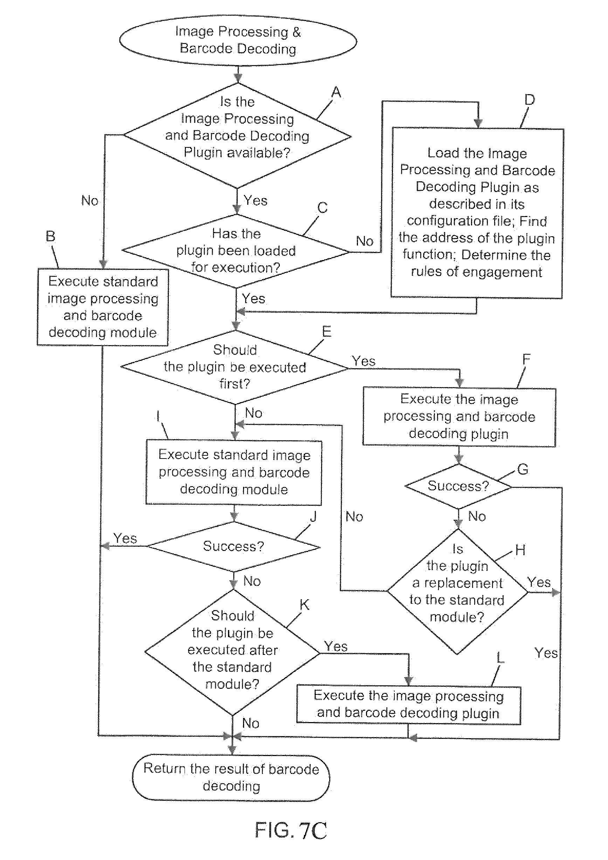

Fig. 7C is an exemplary flow chart representation showing what operations are carried out when the system feature called "Image Processing and Bar Code Decoding" is executed within the Modifiable Main Task software module in the Application Layer of the system;

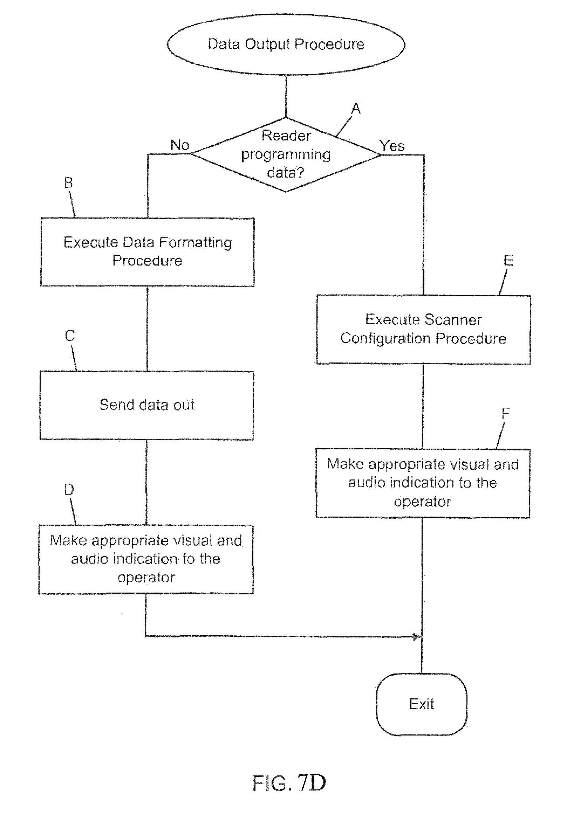

Fig. 7D is an exemplary flow chart representation showing what operations are carried out when the system feature called "Data Output Procedure" is executed within the Modifiable Main Task in the Application Layer of the system;

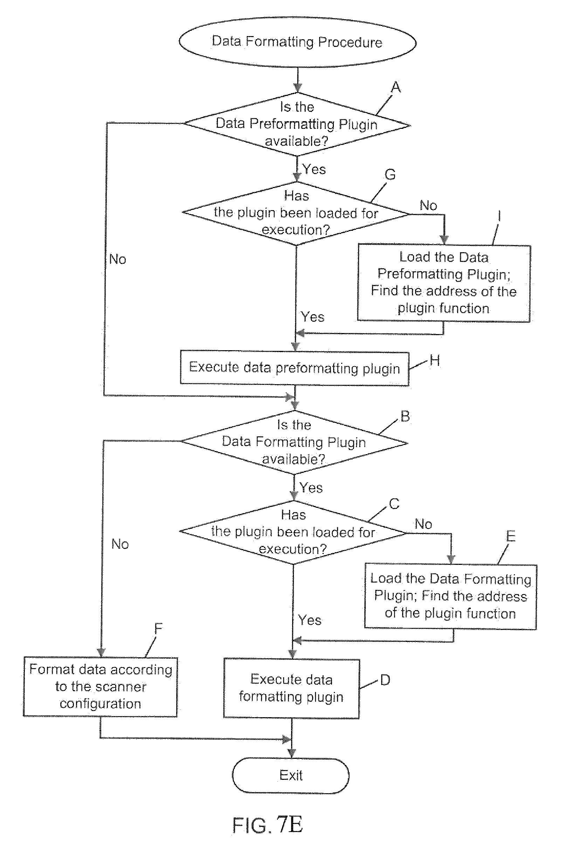

Fig. 7E is an exemplary flow chart representation showing what operations are carried out when the system feature called "Data Formatting Procedure" is executed within the Data Output Procedure software module in the Application Layer of the system;

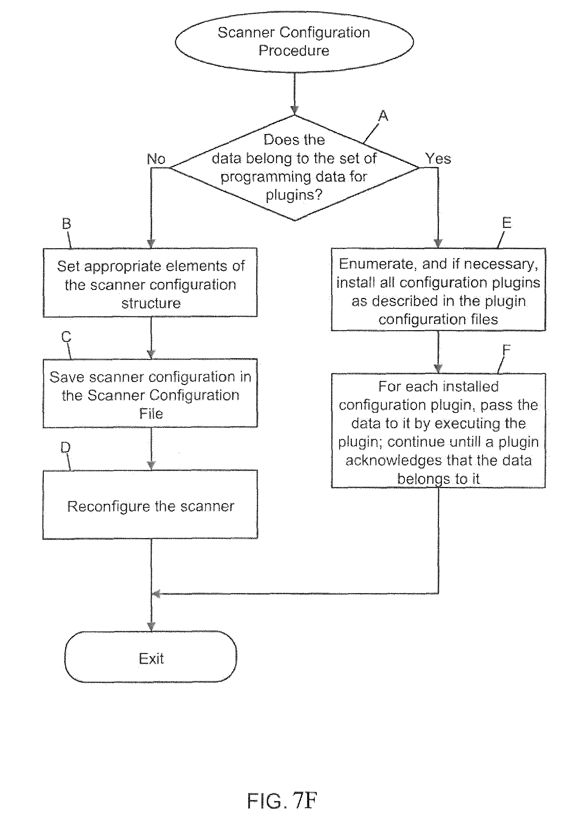

Fig. 7F is an exemplary flow chart representation showing what operations are carried out when the system feature called "Scanner Configuration Procedure" is executed within the Data Output Procedure software module in the Application Layer of the system; and

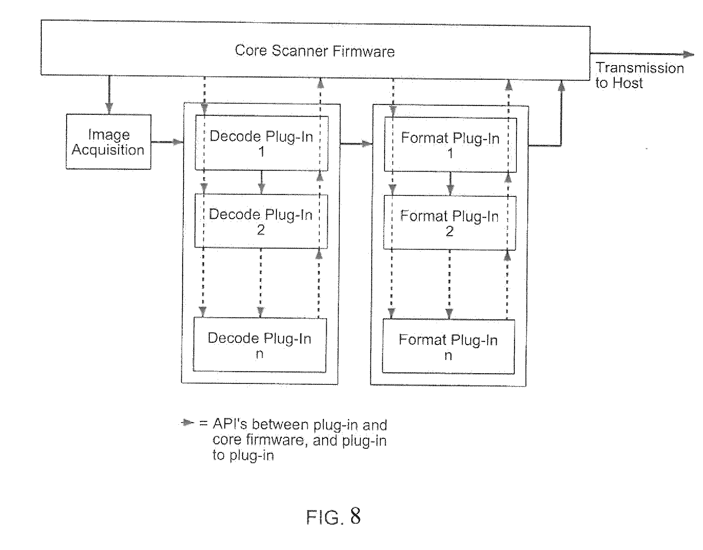

Fig. 8 is a schematic representation of the digital image capture and processing system of the present disclosure, having a multi-tier software architecture depicted in Fig. 4 and supporting the chaining of multiple third-party software plug-ins in the Application Layer of the system, wherein the multiple pieces of third-party plug-in code include a configuration file having conditional logic that controls the ordering or chaining of the multiple third-party plug-ins in the digital image capture and processing system.

### DETAILED DESCRIPTION OF THE ILLUSTRATIVE EMBODIMENTS

Referring to the figures in the accompanying Drawings, the various illustrative embodiments of the hand-supportable imaging-based bar code symbol reading system of the present disclosure will be described in great detail, wherein like elements will be indicated using like reference numerals.

### Overview Of The Digital Image Capture And Processing System Of The Present Disclosure Employ Multi-Layer Software-Based System Architecture Permitting Modification And/Or Extension Of System Features And Functions By Way Of Third Party Code Plug-Ins

The present disclosure addresses the shortcomings and drawbacks of prior art digital image capture and processing systems and devices, including laser and digital imaging-based bar code symbol readers, by providing a novel system architecture, platform and development environment which enables VARs, OEMs and others (i.e. other than the original system designers) to modify and/or extend the standard system features and functions of a very broad class of digital image capture and processing systems and devices, without requiring such third-parties to possess detailed knowledge about the hard-ware platform of the system, its communications with outside environment, and/or its user-related interfaces. This novel approach has numerous benefits and advantages to third parties wishing to employ, in their third party products, the digital image capture and processing technology of an expert digital imager designer and manufacturer, such as Applicants and their Assignee, Metrologic Instruments, Inc., but not having to sacrifice or risk the disclosure of its valuable intellectual property and know now, during such system feature and functionality modification and/or extension processes, in order to meet the requirements of its end-user applications at hand.

As shown in Figs. 1A through 1B, the digital image capture and processing system of the present disclosure 1000 employs a multi-tier software system architecture capable of supporting various subsystems providing numerous standard system features and functions that can be modified and/or extended using the innovative plug-in programming methods of the present disclosure. In the illustrative embodiments of the present disclosure disclosed herein, such subsystems include: an object presence detection subsystem; an object range detection subsystem; an object velocity detection subsystem; an object dimensioning subsystem; a field of view (FOV) illumination subsystem; an imaging formation and detection (IFD) subsystem; a digital image processing subsystem; a sound indicator output subsystem; a visual indictor output subsystem; a power management subsystem; an image time/space stamping subsystem; a network (IP) address storage subsystem; a remote monitoring/servicing subsystem; an input/output subsystem; and a system control and/or coordination subsystem, generally integrated as shown.

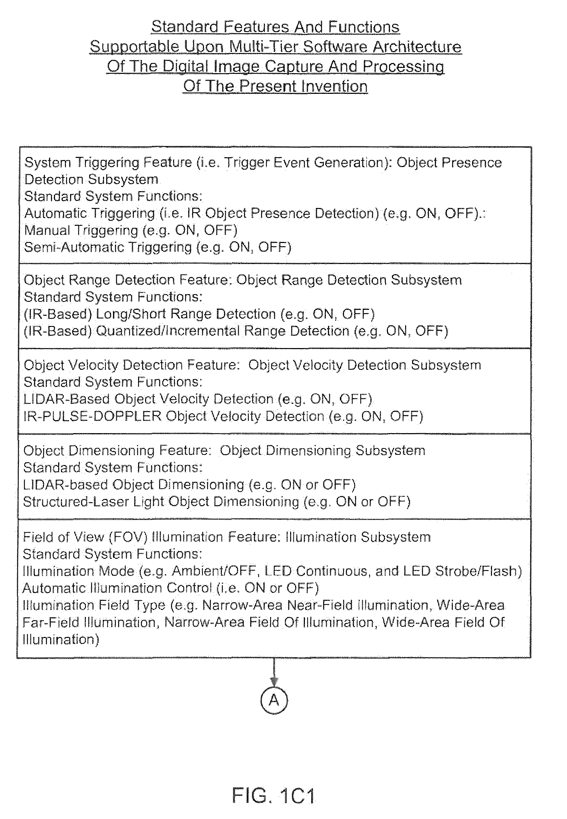

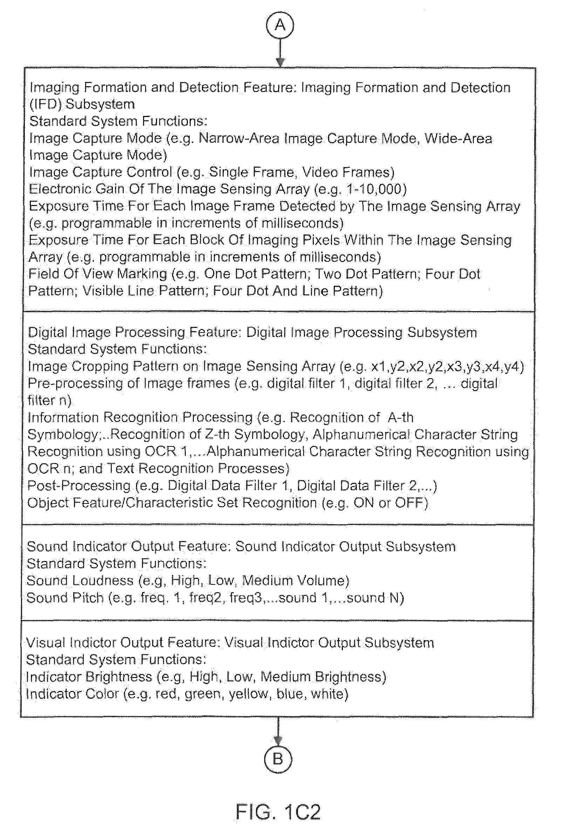

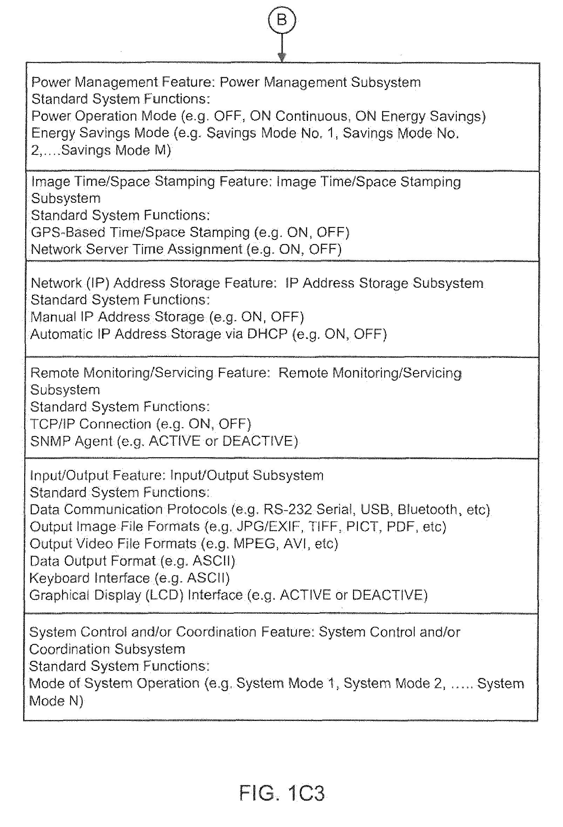

For the illustrative embodiments of the present disclosure disclosed herein, exemplary standard system features and functions are described in the table of Figs. 1C1 and C2. Such system features and functions are described below, in conjunction with the subsystem that generally supports the feature and function in the digital image capture and processing of the present disclosure:
System Triggering Feature (i.e. Trigger Event Generation): Object Presence Detection Subsystem
Standard System Functions:
   Automatic Triggering (i.e. IR Object Presence Detection) (e.g. ON, OFF)
   Manual Triggering (e.g. ON, OFF)
   Semi-Automatic Triggering (e.g. ON, OFF)
Object Range Detection Feature: Object Range Detection Subsystem
Standard System Functions:
   (IR-Based) Long/Short Range Detection (e.g. ON, OFF)
   (IR-Based) Quantized/Incremental Range Detection (e.g. ON, OFF)

Object Velocity Detection Feature: Object Velocity Detection Subsystem
Standard System Functions:
   LIDAR-Based Object Velocity Detection (e.g. ON, OFF)
   IR-PULSE-DOPPLER Object Velocity Detection (e.g. ON, OFF)
Object Dimensioning Feature: Object Dimensioning Subsystem
Standard System Functions:
   LIDAR-based Object Dimensioning (e.g. ON or OFF)
   Structured-Laser Light Object Dimensioning (e.g. ON or OFF)
Field of View (FOV) Illumination Feature: Illumination Subsystem
Standard System Functions:
   Illumination Mode (e.g. Ambient/OFF, LED Continuous, and LED Strobe/Flash) Automatic Illumination Control (i.e. ON or OFF)
   Illumination Field Type (e.g. Narrow-Area Near-Field Illumination, Wide-Area Far-Field Illumination, Narrow-Area Field Of Illumination, Wide-Area Field Of Illumination)
Imaging Formation and Detection Feature: Imaging Formation and Detection (IFD) Subsystem
Standard System Functions:
   Image Capture Mode (e.g. Narrow-Area Image Capture Mode, Wide-Area Image Capture Mode) Image Capture Control (e.g. Single Frame, Video Frames)
   Electronic Gain Of The Image Sensing Array (e.g. 1-10,000)
   Exposure Time For Each Image Frame Detected by The Image Sensing Array (e.g. programmable in increments of milliseconds)
   Exposure Time For Each Block Of Imaging Pixels Within The Image Sensing Array (e.g. programmable in increments of milliseconds)
   Field Of View Marking (e.g. One Dot Pattern; Two Dot Pattern; Four Dot Pattern; Visible Line Pattern; Four Dot And Line Pattern)
Digital Image Processing Feature: Digital Image Processing Subsystem
Standard System Functions:
   Image Cropping Pattern on Image Sensing Array (e.g. x1,y2,x2,y2,x3,y3,x4,y4)
   Pre-processing of Image frames (e.g. digital filter 1, digital filter 2, ... digital filter n)
   Information Recognition Processing (e.g. Recognition of A-th Symbology;..Recognition of Z-th Symbology, Alphanumerical Character String Recognition using OCR 1,...Alphanumerical Character String Recognition using OCR n; and Text Recognition Processes)
   Post-Processing (e.g. Digital Data Filter 1, Digital Data Filter 2,...)
   Object Feature/Characteristic Set Recognition (e.g. ON or OFF)
Sound Indicator Output Feature: Sound Indicator Output Subsystem
Standard System Functions:
   Sound Loudness (e.g. High, Low, Medium Volume)
   Sound Pitch (e.g. freq. 1, freq2, freq3,...sound 1,...sound N)
Visual Indictor Output Feature: Visual Indictor Output Subsystem
Standard System Functions:
   Indicator Brightness (e.g. High, Low, Medium Brightness)
   Indicator Color (e.g. red, green, yellow, blue, white)
Power Management Feature: Power Management Subsystem
Standard System Functions:
   Power Operation Mode (e.g. OFF, ON Continuous, ON Energy Savings)
   Energy Savings Mode (e.g. Savings Mode No. 1, Savings Mode No. 2,....Savings Mode M)
Image Time/Space Stamping Feature: Image Time/Space Stamping Subsystem
Standard System Functions:
   GPS-Based Time/Space Stamping (e.g. ON, OFF)
   Network Server Time Assignment (e.g. ON, OFF)
Network (IP) Address Storage Feature: IP Address Storage Subsystem
Standard System Functions:
   Manual IP Address Storage (e.g. ON, OFF)
   Automatic IP Address Storage via DHCP (e.g. ON, OFF)
Remote Monitoring/Servicing Feature: Remote Monitoring/Servicing Subsystem
Standard System Functions:
   TCP/IP Connection (e.g. ON, OFF)
   SNMP Agent (e.g. ACTIVE or DEACTIVE)
Input/Output Feature: Input/Output Subsystem
Standard System Functions:
   Data Communication Protocols (e.g. RS-232 Serial, USB, Bluetooth, etc)
   Output Image File Formats (e.g. JPG/EXIF, TIFF, PICT, PDF, etc)
   Output Video File Formats (e.g. MPEG, AVI, etc)
   Data Output Format (e.g. ASCII)
   Keyboard Interface (e.g. ASCII)
   Graphical Display (LCD) Interface (e.g. ACTIVE or DEACTIVE)
System Control and/or Coordination Feature: System Control and/or Coordination Subsystem
Standard System Functions:
   Mode of System Operation (e.g. System Mode 1, System Mode 2, ..... System Mode N)

As indicated in Fig. 1D, the digital image capture and processing system of the present disclosure 1000, represented in Figs. 1A through 1C3, can be implemented using a digital camera board and a printed circuit (PC) board that are interfaced together. Alternatively, as shown in Fig. 1E, the digital image capture and processing system of the present disclosure 1000 can also be implemented using a single hybrid digital camera/PC board, as shown.

As shown in Fig. 1F, the digital image capture and processing system of the present disclosure can be integrated or embodied within third-party products, such as, for example, but not limited to, image-processing based bar code symbol reading systems, OCR systems, object recognition systems, portable data terminals (PDTs), mobile phones, computer mice-type devices, personal computers, keyboards, consumer appliances, automobiles, ATMs, vending machines, reverse-vending machines, retail POS-based transaction systems, 2D or 2D digitizers, and CAT scanning systems, automobile identification systems, package inspection systems, and personal identification systems, and the like.

In general, the digital image capture and processing system of the present disclosure has a set of standard features and functions as described above, and a set of custom features and functionalities that satisfy customized end-user application requirements, which typically aim to modify and/or extend such standard system features and functions for particular applications at hand.

In the illustrative embodiments described in detail below with reference to Figs. 2A through 5, the digital image capture and processing system of the present disclosure (regardless of the third-product into which the system is integrated or embodied), generally comprises:
a digital camera subsystem for projecting a field of view (FOV) upon an object to be imaged in said FOV, and detecting imaged light reflected off the object during illumination operations in an image capture mode in which one or more digital images of the object are formed and detected by said digital camera subsystem; a digital image processing subsystem for processing digital images and producing raw or processed output data or recognizing or acquiring information graphically represented therein, and producing output data representative of the recognized information; an input/output subsystem for transmitting said output data to an external host system or other information receiving or responding device; a system control system for controlling and/or coordinating the operation of the subsystems above; and a computing platform for supporting the implementation of one or more of the subsystems above, and the features and functions of the digital image capture and processing system.

The computing platform includes (i) memory for storing pieces of original product code written by the original designers of the digital image capture and processing system, and (ii) a microprocessor for running one or more Applications by calling and executing pieces of the original product code in a particular sequence, so as support a set of standard features and functions which characterize a standard behavior of the digital image capture and processing system.

As will be described in greater detail with reference to Figs. 6 through 7F, these pieces of original product code have a set of place holders into which third-party product code can be inserted or plugged by third parties, including value-added resellers (VARs), original equipment manufacturers (OEMs), and also end-users of the digital image capture and processing system.

In accordance with the novel principles of the present disclosure, one or more pieces of third-party code ("plug-ins") are inserted or plugged into the set of place holders, and operate to extend the standard features and functions of the digital image capture and processing system, and modify the standard behavior thereof into a custom behavior for the digital image capture and processing system.

In most embodiments of the present disclosure, the digital image capture and processing system will further comprise a housing having a light transmission window, wherein the FOV is projected through the light transmission window and upon an object to be imaged in the FOV. Also, typically, these pieces of original product code as well as third-party product code are maintained in one or more libraries supported in the memory structure of the computing platform. In general, such memory comprises a memory architecture having different kinds of memory, each having a different access speed and performance characteristics.

In accordance with the principles of the present disclosure, the end-user, such a value-added reseller (VAR) or original equipment manufacturer (OEM), can write such pieces of third-party code (i.e. plug-ins) according to specifications set by the original system designers, and these pieces of custom code can be plugged into the place holders, so as to modify and extend the features and functions of the digital image capture and processing system (or third-party product into which the system is integrated or embodied), and modify the standard behavior of the digital image capture and processing system into a custom behavior for the digital image capture and processing system, without permanently modifying the standard features and functions of the digital image capture and processing system.

In some illustrative embodiments of the present disclosure, the digital camera system comprises: a digital image formation and detection subsystem having (i) image formation optics for projecting the FOV through a light transmission window and upon the object to be imaged in the FOV, and (ii) an image sensing array for detecting imaged light reflected off the object during illumination operations in an image capture mode in which sensor elements in the image sensing array are enabled so as to detect one or more digital images of the object formed on the image sensing array; an illumination subsystem having an illumination array for producing and projecting a field of illumination through the light transmission window and within the FOV during the image capture mode; and an image capturing and buffering subsystem for capturing and buffering these digital images detected by the image formation and detection subsystem.

The image sensing array can be realized by a digital image sensing structure selected from the group consisting of an area-type image sensing array, and a linear-type image sensing array.

Preferably, the memory employed in the computing platform of the system maintains system parameters used to configure the functions of the digital image capture and processing system. In the illustrative embodiments, the memory comprises a memory architecture that supports a three-tier modular software architecture characterized by an Operating System (OS) layer, a System CORE (SCORE) layer, and an Application layer and responsive to the generation of a triggering event within said digital-imaging based code symbol reading system. The OS layer includes one or more software modules selected from the group consisting of an OS kernal module, an OS file system module, and device driver modules. The SCORE layer includes one or more of software modules selected from the group consisting of a tasks manager module, an events dispatcher module, an input/output manager module, a user commands manager module, the timer subsystem module, an input/output subsystem module and an memory control subsystem module. The application layer includes one or more software modules selected from the group consisting of a code symbol decoding module, a function programming module, an application events manager module, a user commands table module, and a command handler module.

The field of illumination projected from the illumination subsystem can be narrow-band illumination produced from an array of light emitting diodes (LEDs). Also, the digital image processing subsystem is typically adapted to process captured digital images so as to read one or more code symbols graphically represented in the digital images, and produces output data in the form of symbol character data representative of the read one or more code symbols. Each code symbol can be a bar code symbol selected from the group consisting of a 1D bar code symbol, a 2D bar code symbol, and a data matrix type code symbol structure.

These and other aspects of the present disclosure will become apparent hereinafter and in the claims. It is now, therefore, appropriate at this juncture to now describe in detail, with reference to Figs. 2A through 5, the various illustrative embodiments of the digital image capture and processing system of the present disclosure depicted in Figs. 1A through IF. In each of these illustrative embodiments shown in Figs. 2A through 5, the digital image capture and processing system 1000 of the present disclosure is either integrated or embodied into the structure, features and functionalities of the systems or products shown. After these illustrative embodiments have been described, the technical aspects of the plug-in programming methods of the present disclosure will be described in great detail with reference to Figs. 6 through 7E.

### Hand-Supportable Digital Imaging-Based Bar Code Reading Device Of The Illustrative Embodiment Of The Present Disclosure

Referring to Figs. 2A through 2L2, the hand-supportable digital imaging-based bar code symbol reading device of the first illustrative embodiment of the present disclosure 1 is shown in detail comprising a hand-supportable housing 2 having a handle portion 2A and a head portion 2B that is provided with a light transmission window 3 with a high-pass (red-wavelength reflecting) optical filter element 4A. As will be described in greater detail hereinafter, high-pass optical filter element 4A cooperates within an interiorly mounted low-pass optical filter element 4B, which cooperates with the high-pass optical filter element 4A. These high and low pass filter elements 4A and 4B cooperate to provide a narrow-band optical filter system 4 that integrates with the head portion of the housing and permits only a narrow band of illumination (e.g. 633 nanometers) to exit and enter the housing during imaging operations.

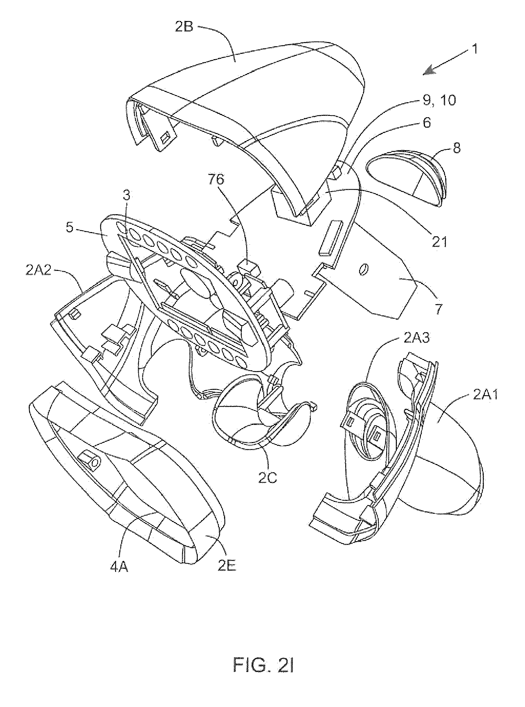

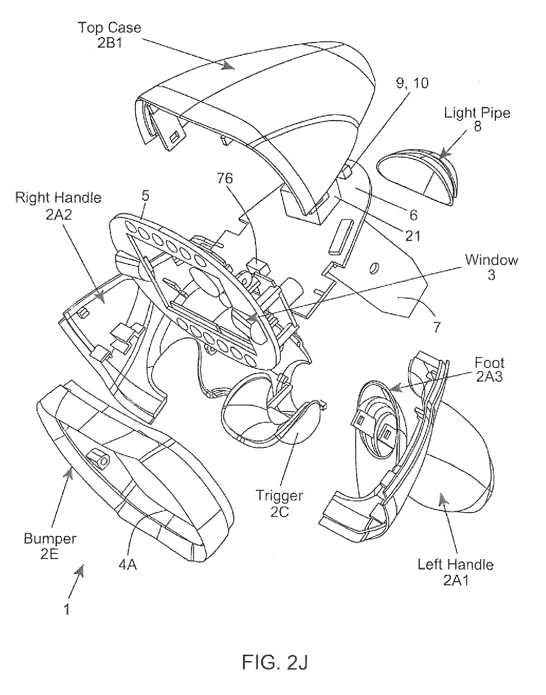

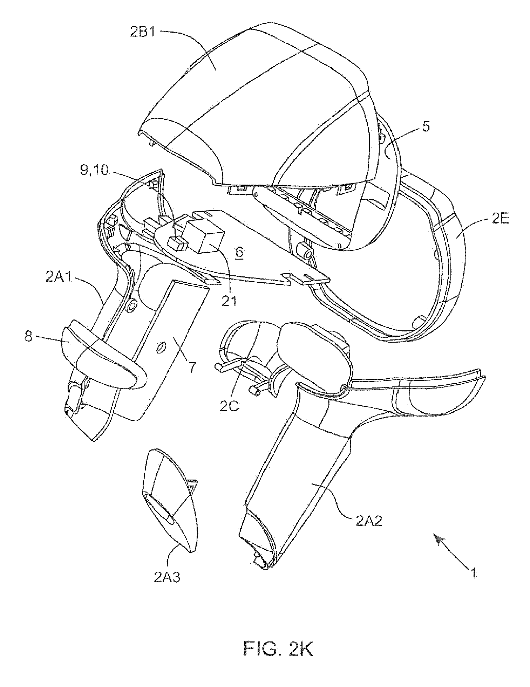

As best shown in Figs. 2I, 2J, and 2K, the hand-supportable housing 2 of the illustrative embodiment comprises: left and right housing handle halves 2A1 and 2A2; a foot-like structure 2A3 which is mounted between the handle halves 2A1 and 2A2; a trigger switch structure 2C which snap fits within and pivots within a pair of spaced apart apertures 2D1 and 2D2 provided in the housing halves; a light transmission window panel 5 through which light transmission window 3 is formed and supported within a recess formed by handle halves 2A1 and 2A2 when they are brought together, and which supports all LED illumination arrays provided by the system; an optical bench 6 for supporting electro-optical components and operably connected an orthogonally-mounted PC board 7 which is mounted within the handle housing halves; a top housing portion 2B1 for connection with the housing handle halves 2A1 and 2A2 and enclosing the head portion of the housing; light pipe lens element 7 for mounting over an array of light emitting diodes (LEDs) 9 and light pipe structures 10 mounted within the rear end of the head portion of the hand-supportable housing; and a front bumper structure 2E for holding together the top housing portion 2B1 and left and right handle halves 2A1 and 2A2 with the light transmission window panel 5 sandwiched therebetween, while providing a level of shock protection thereto.

In other possible embodiments of the present disclosure, the form factor of the hand-supportable housing can and might be different. In yet other applications, the housing need not even be hand-supportable, but rather might be designed for stationary support on a desktop or countertop surface, or for use in a commercial or industrial application.

### Schematic Block Functional Diagram As System Design Model For The Hand-Supportable Digital Image-Based Bar Code Reading Device Of The Present Disclosure

As shown in the system design model of Fig. 2L1, the hand-supportable Digital Imaging-Based Bar Code Symbol Reading Device 1 of the illustrative embodiment comprises: an IR-based Object Presence and Range Detection Subsystem 12; a Multi-Mode Area-type Image Formation and Detection (i.e. camera) Subsystem 13 having narrow-area mode of image capture, near-field wide-area mode of image capture, and a far-field wide-area mode of image capture; a Multi-Mode LED-Based Illumination Subsystem 14 having narrow-area mode of illumination, near-field wide-area mode of illumination, and a far-field wide-area mode of illumination; an Automatic Light Exposure Measurement and Illumination Control Subsystem 15; an Image Capturing and Buffering Subsystem 16; a Multi-Mode Image-Processing Bar Code Symbol Reading Subsystem 17 having five modes of image-processing based bar code symbol reading indicated in Fig. 2L2 and to be described in detail hereinabove; an Input/Output Subsystem 18; a manually-actuatable trigger switch 2C for sending user-originated control activation signals to the device; a System Mode Configuration Parameter Table 70; and a System Control Subsystem 18 integrated with each of the above-described subsystems, as shown.

The primary function of the IR-based Object Presence and Range Detection Subsystem 12 is to automatically produce an IR-based object detection field 20 within the FOV of the Multi-Mode Image Formation and Detection Subsystem 13, detect the presence of an object within predetermined regions of the object detection field (20A, 20B), and generate control activation signals A1 which are supplied to the System Control Subsystem 19 for indicating when and where an object is detected within the object detection field of the system.

In the first illustrative embodiment, the Multi-Mode Image Formation And Detection (i.e. Camera) Subsystem 13 has image formation (camera) optics 21 for producing a field of view (FOV) 23 upon an object to be imaged and a CMOS area-image sensing array 22 for detecting imaged light reflected off the object during illumination and image acquisition/capture operations.

In the first illustrative embodiment, the primary function of the Multi-Mode LED-Based Illumination Subsystem 14 is to produce a narrow-area illumination field 24, near-field wide-area illumination field 25, and a far-field wide-area illumination field 25, each having a narrow optical-bandwidth and confined within the FOV of the Multi-Mode Image Formation And Detection Subsystem 13 during narrow-area and wide-area modes of imaging, respectively. This arrangement is designed to ensure that only light transmitted from the Multi-Mode Illumination Subsystem 14 and reflected from the illuminated object is ultimately transmitted through a narrow-band transmission-type optical filter subsystem 4 realized by (1) high-pass (i.e. red-wavelength reflecting) filter element 4A mounted at the light transmission aperture 3 immediately in front of panel 5, and (2) low-pass filter element 4B mounted either before the image sensing array 22 or anywhere after panel 5 as shown in Fig. 3C. Fig. 5A4 sets forth the resulting composite transmission characteristics of the narrow-band transmission spectral filter subsystem 4, plotted against the spectral characteristics of the emission from the LED illumination arrays employed in the Multi-Mode Illumination Subsystem 14.

The primary function of the narrow-band integrated optical filter subsystem 4 is to ensure that the CMOS image sensing array 22 only receives the narrow-band visible illumination transmitted by the three sets of LED-based illumination arrays 27, 28 and 29 driven by LED driver circuitry 30 associated with the Multi-Mode Illumination Subsystem 14, whereas all other components of ambient light collected by the light collection optics are substantially rejected at the image sensing array 22, thereby providing improved SNR thereat, thus improving the performance of the system.

The primary function of the Automatic Light Exposure Measurement and Illumination Control Subsystem 15 is to twofold: (1) to measure, in real-time, the power density [joules/cm] of photonic energy (i.e. light) collected by the optics of the system at about its image sensing array 22, and generate Auto-Exposure Control Signals indicating the amount of exposure required for good image formation and detection; and (2) in combination with Illumination Array Selection Control Signal provided by the System Control Subsystem 19, automatically drive and control the output power of selected LED arrays 27, 28 and/or 29 in the Multi-Mode Illumination Subsystem, so that objects within the FOV of the system are optimally exposed to LED-based illumination and optimal images are formed and detected at the image sensing array 22.

The primary function of the Image Capturing and Buffering Subsystem 16 is to (1) detect the entire 2-D image focused onto the 2D image sensing array 22 by the image formation optics 21 of the system, (2) generate a frame of digital pixel data 31 for either a selected region of interest of the captured image frame, or for the entire detected image, and then (3) buffer each frame of image data as it is captured. Notably, in the illustrative embodiment, a single 2D image frame (31) is captured during each image capture and processing cycle, or during a particular stage of a processing cycle, so as to eliminate the problems associated with image frame overwriting, and synchronization of image capture and decoding processes, as addressed in US Patents Nos. 5,932,862 and 5,942,741 assigned to Welch Allyn

The primary function of the Multi-Mode Imaging-Based Bar Code Symbol Reading Subsystem 17 is to process images that have been captured and buffered by the Image Capturing and Buffering Subsystem 16, during both narrow-area and wide-area illumination modes of system operation. Such image processing operation includes image-based bar code decoding methods illustrated in Figs. 14 through 25, and described in detail hereinafter.

The primary function of the Input/Output Subsystem 18 is to support standard and/or proprietary communication interfaces with external host systems and devices, and output processed image data and the like to such external host systems or devices by way of such interfaces. Examples of such interfaces, and technology for implementing the same, are given in US Patent No. 6,619,549, incorporated herein by reference in its entirety.

The primary function of the System Control Subsystem 19 is to provide some predetermined degree of control or management signaling services to each subsystem component integrated, as shown. While this subsystem can be implemented by a programmed microprocessor, in the illustrative embodiment, it is implemented by the three-tier software architecture supported on computing platform shown in Fig. 2M, and as represented in Figs. 11A through 13L, and described in detail hereinafter.

The primary function of the manually-activatable Trigger Switch 2C integrated with the hand-supportable housing is to enable the user to generate a control activation signal upon manually depressing the Trigger Switch 2C, and to provide this control activation signal to the System Control Subsystem 19 for use in carrying out its complex system and subsystem control operations, described in detail herein.

The primary function of the System Mode Configuration Parameter Table 70 is to store (in non-volatile/persistent memory) a set of configuration parameters for each of the programmable modes of system operation supported by the system of the illustrative embodiment, and which can be read and used by the System Control Subsystem 19 as required during its complex operations.

The detailed structure and function of each subsystem will now be described in detail above.

### Schematic Diagram As System Implementation Model For The Hand-Supportable Digital Imaging-Based Bar Code Reading Device Of The Present Disclosure

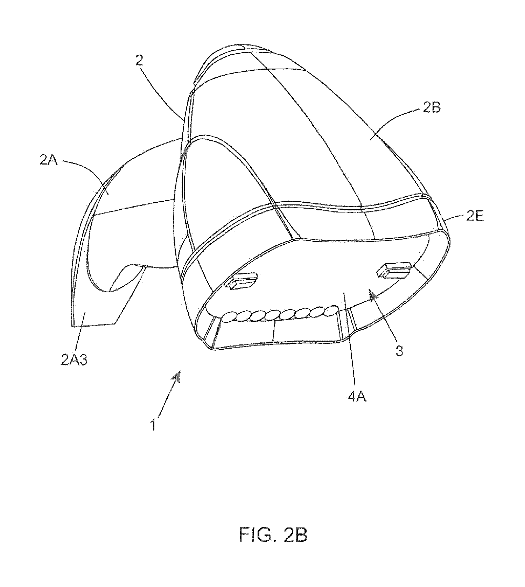

Fig. 2B shows a schematic diagram of a system implementation for the hand-supportable Digital Imaging-Based Bar Code Symbol Reading Device 1 illustrated in Figs. 2A through 2L. As shown in this system implementation, the bar code symbol reading device is realized using a number of hardware component comprising: an illumination board 33 carrying components realizing electronic functions performed by the LED-Based Multi-Mode Illumination Subsystem 14 and Automatic Light Exposure Measurement And Illumination Control Subsystem 15; a CMOS camera board 34 carrying high resolution (1280 X 1024 7-bit 6 micron pixel size) CMOS image sensing array 22 running at 25Mhz master clock, at 7 frames/second at 1280*1024 resolution with randomly accessible region of interest (ROI) window capabilities, realizing electronic functions performed by the Multi-Mode Image Formation and Detection Subsystem 13; a CPU board 35 (i.e. computing platform) including (i) an Intel Sabinal 32-Bit Microprocessor PXA210 36 running at 200 mHz 1.0 core voltage with a 16 bit 100Mhz external bus speed, (ii) an expandable (e.g. 7+ megabyte) Intel J3 Asynchronous 16-bit Flash memory 37, (iii) an 16 Megabytes of 100 MHz SDRAM 38, (iv) an Xilinx Spartan II FPGA FIFO 39 running at 50Mhz clock frequency and 60MB/Sec data rate, configured to control the camera timings and drive an image acquisition process, (v) a multimedia card socket 40, for realizing the other subsystems of the system, (vi) a power management module 41 for the MCU adjustable by the I2C bus, and (vii) a pair of UARTs 42A and 42B (one for an IRDA port and one for a JTAG port); an interface board 43 for realizing the functions performed by the I/O subsystem 18; and an IR-based object presence and range detection circuit 44 for realizing Subsystem 12, which includes a pair of IR LEDs and photodiodes 12A for transmitting and receiving a pencil-shaped IR-based object-sensing signal.

In the illustrative embodiment, the image formation optics 21 supported by the bar code reader provides a field of view of 103 mm at the nominal focal distance to the target, of approximately 70 mm from the edge of the bar code reader. The minimal size of the field of view (FOV) is 62 mm at the nominal focal distance to the target of approximately 10 mm. Preliminary tests of the parameters of the optics are shown on Fig. 4B (the distance on Fig. 4B is given from the position of the image sensing array 22, which is located inside the bar code symbol reader approximately 80 mm from the edge). As indicated in Fig. 4C, the depth of field of the image formation optics varies from approximately 69 mm for the bar codes with resolution of 5 mils per narrow module, to 181 mm for the bar codes with resolution of 13 mils per narrow module.

The Multi-Mode Illumination Subsystem 14 is designed to cover the optical field of view (FOV) 23 of the bar code symbol reader with sufficient illumination to generate high-contrast images of bar codes located at both short and long distances from the imaging window. The illumination subsystem also provides a narrow-area (thin height) targeting beam 24 having dual purposes: (a) to indicate to the user where the optical view of the reader is; and (b) to allow a quick scan of just a few lines of the image and attempt a super-fast bar code decoding if the bar code is aligned properly. If the bar code is not aligned for a linearly illuminated image to decode, then the entire field of view is illuminated with a wide-area illumination field 25 or 26 and the image of the entire field of view is acquired by Image Capture and Buffering Subsystem 16 and processed by Multi-Mode Bar Code Symbol Reading Subsystem 17, to ensure reading of a bar code symbol presented therein regardless of its orientation.

The interface board 43 employed within the bar code symbol reader provides the hardware communication interfaces for the bar code symbol reader to communicate with the outside world. The interfaces implemented in system will typically include RS232, keyboard wedge, and/or USB, or some combination of the above, as well as others required or demanded by the particular application at hand.

### Specification Of The Area-Type Image- Formation And Detection (i.e. Camera) Subsystem During Its Narrow-Area (Linear) And Wide-Area Modes Of Imaging, Supported By The Narrow And Wide Area Fields Of Narrow-Band Illumination, Respectively

As shown in Figs. 3B through 3E, the Multi-Mode Image Formation And Detection (IFD) Subsystem 13 has a narrow-area image capture mode (i.e. where only a few central rows of pixels about the center of the image sensing array are enabled) and a wide-area image capture mode of operation (i.e. where all pixels in the image sensing array are enabled). The CMOS image sensing array 22 in the Image Formation and Detection Subsystem 13 has image formation optics 21 which provides the image sensing array with a field of view (FOV) 23 on objects to be illuminated and imaged. As shown, this FOV is illuminated by the Multi-Mode Illumination Subsystem 14 integrated within the bar code reader.

The Multi-Mode Illumination Subsystem 14 includes three different LED-based illumination arrays 27, 28 and 29 mounted on the light transmission window panel 5, and arranged about the light transmission window 4A. Each illumination array is designed to illuminate a different portion of the FOV of the bar code reader during different modes of operation. During the narrow-area (linear) illumination mode of the Multi-Mode Illumination Subsystem 14, the central narrow-wide portion of the FOV indicated by 23 is illuminated by the narrow-area illumination array 27, shown in Fig. 3A. During the near-field wide-area illumination mode of the Multi-Mode Illumination Subsystem 14, which is activated in response to the IR Object Presence and Range Detection Subsystem 12 detecting an object within the near-field portion of the FOV, the near-field wide-area portion of the FOV is illuminated by the near-field wide-area illumination array 28, shown in Fig. 3A. During the far-field wide-area illumination mode of the Multi-Mode Illumination Subsystem 14, which is activated in response to the IR Object Presence and Range Detection Subsystem 12 detecting an object within the far-field portion of the FOV, the far-field wide-area portion of the FOV is illuminated by the far-field wide-area illumination array 29, shown in Fig. 3A. In Fig. 3A, the spatial relationships are shown between these fields of narrow-band illumination and the far and near field portions the FOV of the Image Formation and Detection Subsystem 13.

In Fig. 3B, the Multi-Mode LED-Based Illumination Subsystem 14 is shown transmitting visible narrow-band illumination through its narrow-band transmission-type optical filter subsystem 4, shown in Fig. 3C and integrated within the hand-supportable Digital Imaging-Based Bar Code Symbol Reading Device. The narrow-band illumination from the Multi-Mode Illumination Subsystem 14 illuminates an object with the FOV of the image formation optics of the Image Formation and Detection Subsystem 13, and light rays reflected and scattered therefrom are transmitted through the high-pass and low-pass optical filters 4A and 4B and are ultimately focused onto image sensing array 22 to form of a focused detected image thereupon, while all other components of ambient light are substantially rejected before reaching image detection at the image sensing array 22. Notably, in the illustrative embodiment, the red-wavelength reflecting high-pass optical filter element 4A is positioned at the imaging window of the device before the image formation optics 21, whereas the low-pass optical filter element 4B is disposed before the image sensing array 22 between the focusing lens elements of the image formation optics 21. This forms narrow-band optical filter subsystem 4 which is integrated within the bar code reader to ensure that the object within the FOV is imaged at the image sensing array 22 using only spectral components within the narrow-band of illumination produced from Subsystem 14, while rejecting substantially all other components of ambient light outside this narrow range (e.g. 15 nm).

### Specification Of Multi-Mode LED-Based Illumination Subsystem Employed In The Hand-Supportable Image-Based Bar Code Reading System Of The Present Disclosure

In the illustrative embodiment, the LED-Based Multi-Mode Illumination Subsystem 14 comprises: narrow-area illumination array 27; near-field wide-area illumination array 28; and far-field wide-area illumination array 29. The three fields of narrow-band illumination produced by the three illumination arrays of subsystem 14 are schematically depicted in Fig. 4A1. Narrow-area illumination array 27 can be realized as two independently operable arrays, namely: a near-field narrow-area illumination array and a far-field narrow-area illumination array, which are activated when the target object is detected within the near and far fields, respectively, of the automatic IR-based Object Presence and Range Detection Subsystem 12 during wide-area imaging modes of operation. However, for purposes of illustration, the first illustrative embodiment of the present disclosure employs only a single field narrow-area (linear) illumination array which is designed to illuminate over substantially entire working range of the system, as shown in Fig. 4A1.

The narrow-area (linear) illumination array 27 includes two pairs of LED light sources 27A1 and 27A2 provided with cylindrical lenses 27B1 and 27B2, respectively, and mounted on left and right portions of the light transmission window panel 5. During the narrow-area image capture mode of the Image Formation and Detection Subsystem 13, the narrow-area (linear) illumination array 27 produces narrow-area illumination field 24 of narrow optical-bandwidth within the FOV of the system. In the illustrative embodiment, narrow-area illumination field 24 has a height less than 10 mm at far field, creating the appearance of substantially linear or rather planar illumination field.

In an illustrative embodiment, the near-field wide-area illumination array 28 includes two sets of (flattop) LED light sources 28A1-28A6 and 28A7-28A13 without any lenses mounted on the top and bottom portions of the light transmission window panel 5, as shown in Fig. 4B. During the near-field wide-area image capture mode of the Image Formation and Detection Subsystem 13, the near-field wide-area illumination array 28 produces a near-field wide-area illumination field 25 of narrow optical-bandwidth within the FOV of the system.

In an illustrative embodiment, far-field wide-area illumination array 29 includes two sets of LED light sources 29A1-29A6 and 29A7-29A13 provided with spherical (i.e. plano-convex) lenses 29B1-29B6 and 29B7-29B13, respectively, and mounted on the top and bottom portions of the light transmission window panel 5. During the far-field wide-area image capture mode of the Image Formation and Detection Subsystem 13, the far-field wide-area illumination array 29 produces a far-field wide-area illumination beam of narrow optical-bandwidth within the FOV of the system.

### Specification Of The Three-Tier Software Architecture Of The Hand-Supportable Digital Image-Based Bar Code Reading Device Of The Present Disclosure

As shown in Fig. 4, the hand-supportable digital imaging-based bar code symbol reading device of the present disclosure 1 is provided with a three-tier software architecture comprising the following software modules: (1) the Main Task module, the CodeGate Task module, the Metroset Task module, the Application Events Manager module, the User Commands Table module, the Command Handler module, the Plug-In Controller (Manager) and Plug-In Libraries and Configuration Files, each residing within the Application layer of the software architecture; (2) the Tasks Manager module, the Events Dispatcher module, the Input/Output Manager module, the User Commands Manager module, the Timer Subsystem module, the Input/Output Subsystem module and the Memory Control Subsystem module, each residing within the System Core (SCORE) layer of the software architecture; and (3) the Linux Kernal module, the Linux File System module, and Device Drivers modules, each residing within the Linux Operating System (OS) layer of the software architecture.

While the operating system layer of the imaging-based bar code symbol reader is based upon the Linux operating system, it is understood that other operating systems can be used (e.g. Microsoft Windows, Max OXS, Unix, etc), and that the design preferably provides for independence between the main Application Software Layer and the Operating System Layer, and therefore, enables of the Application Software Layer to be potentially transported to other platforms. Moreover, the system design principles of the present disclosure provides an extensibility of the system to other future products with extensive usage of the common software components, which should make the design of such products easier, decrease their development time, and ensure their robustness.

In the illustrative embodiment, the above features are achieved through the implementation of an event-driven multi-tasking, potentially multi-user, Application layer running on top of the System Core software layer, called SCORE. The SCORE layer is statically linked with the product Application software, and therefore, runs in the Application Level or layer of the system. The SCORE layer provides a set of services to the Application in such a way that the Application would not need to know the details of the underlying operating system, although all operating system APIs are, of course, available to the application as well. The SCORE software layer provides a real-time, event-driven, OS-independent framework for the product Application to operate. The event-driven architecture is achieved by creating a means for detecting events (usually, but not necessarily, when the hardware interrupts occur) and posting the events to the Application for processing in real-time manner. The event detection and posting is provided by the SCORE software layer. The SCORE layer also provides the product Application with a means for starting and canceling the software tasks, which can be running concurrently, hence, the multi-tasking nature of the software system of the present disclosure.

### Specification of Software Modules Within The SCORE Layer Of The System Software Architecture Employed In Imaging-Based Bar Code Reader Of The Present Disclosure

The SCORE layer provides a number of services to the Application layer.

The Tasks Manager provides a means for executing and canceling specific application tasks (threads) at any time during the product Application run.

The Events Dispatcher provides a means for signaling and delivering all kinds of internal and external synchronous and asynchronous events

When events occur, synchronously or asynchronously to the Application, the Events Dispatcher dispatches them to the Application Events Manager, which acts on the events accordingly as required by the Application based on its current state. For example, based on the particular event and current state of the application, the Application Events Manager can decide to start a new task, or stop currently running task, or do something else, or do nothing and completely ignore the event.

The Input/Output Manager provides a means for monitoring activities of input / output devices and signaling appropriate events to the Application when such activities are detected.

The Input/Output Manager software module runs in the background and monitors activities of external devices and user connections, and signals appropriate events to the Application Layer, which such activities are detected. The Input/Output Manager is a high-priority thread that runs in parallel with the Application and reacts to the input/output signals coming asynchronously from the hardware devices, such as serial port, user trigger switch 2C, bar code reader, network connections, etc. Based on these signals and optional input/output requests (or lack thereof) from the Application, it generates appropriate system events, which are delivered through the Events Dispatcher to the Application Events Manager as quickly as possible as described above.

The User Commands Manager provides a means for managing user commands, and utilizes the User Commands Table provided by the Application, and executes appropriate User Command Handler based on the data entered by the user.

The Input/Output Subsystem software module provides a means for creating and deleting input/output connections and communicating with external systems and devices

The Timer Subsystem provides a means of creating, deleting, and utilizing all kinds of logical timers.

The Memory Control Subsystem provides an interface for managing the multi-level dynamic memory with the device, fully compatible with standard dynamic memory management functions, as well as a means for buffering collected data. The Memory Control Subsystem provides a means for thread-level management of dynamic memory. The interfaces of the Memory Control Subsystem are fully compatible with standard C memory management functions. The system software architecture is designed to provide connectivity of the device to potentially multiple users, which may have different levels of authority to operate with the device.

The User Commands Manager, which provides a standard way of entering user commands, and executing application modules responsible for handling the same. Each user command described in the User Commands Table is a task that can be launched by the User Commands Manager per user input, but only if the particular user's authority matches the command's level of security.

The Events Dispatcher software module provides a means of signaling and delivering events to the Application Events Manager, including the starting of a new task, stopping a currently running task, or doing something or nothing and simply ignoring the event.

### Specification of Software Modules Within The Application Layer Of The System Software Architecture Employed In Imaging-Based Bar Code Reader Of The Present Disclosure

The image processing software employed within the system hereof performs its bar code reading function by locating and recognizing the bar codes within the frame of a captured image comprising pixel data. The modular design of the image processing software provides a rich set of image processing functions, which could be utilized in the future for other potential applications, related or not related to bar code symbol reading, such as: optical character recognition (OCR) and verification (OCV); reading and verifying directly marked symbols on various surfaces; facial recognition and other biometrics identification; etc.

The CodeGate Task, in an infinite loop, performs the following task. It illuminates a "thin" narrow horizontal area at the center of the field-of-view (FOV) and acquires a digital image of that area. It then attempts to read bar code symbols represented in the captured frame of image data using the image processing software facilities supported by the Image-Processing Bar Code Symbol Reading Subsystem 17 of the present disclosure to be described in greater detail hereinafter. If a bar code symbol is successfully read, then Subsystem 17 saves the decoded data in the special Decode Data Buffer. Otherwise, it clears the Decode Data Buffer. Then, it continues the loop. The CodeGate Task routine never exits on its own. It can be canceled by other modules in the system when reacting to other events. For example, when a user pulls the trigger switch 2C, the event TRIGGER_ON is posted to the application. The Application software responsible for processing this event, checks if the CodeGate Task is running, and if so, it cancels it and then starts the Main Task. The CodeGate Task can also be canceled upon OBJECT_DETECT_OFF event, posted when the user moves the bar code reader away from the object, or when the user moves the object away from the bar code reader. The CodeGate Task routine is enabled (with Main Task) when "semi-automatic-triggered" system modes of programmed operation are to be implemented on the illumination and imaging platform of the present disclosure.

The Narrow-Area Illumination Task is a simple routine which is enabled (with Main Task) when "manually-triggered" system modes of programmed operation are to be implemented on the illumination and imaging platform of the present disclosure. However, this routine is never enabled simultaneously with CodeGate Task. As shown in the event flow chart of Fig. 13D, either CodeGate Task or Narrow-Area Illumination Task are enabled with the Main Task routine to realize the diverse kinds of system operation described herein.

Depending the System Mode in which the imaging-based bar code symbol reader is configured, Main Task will typically perform differently. For example, when the imaging-based bar code symbol reader is configured in the Semi-Automatic-Triggered Multiple-Attempt 1D/2D Single-Read Mode, the Main Task first checks if the Decode Data Buffer contains data decoded by the CodeGate Task. If so, then it immediately sends the data out to the user by executing the Data Output procedure and exits. Otherwise, in a loop, the Main Task does the following: it illuminates an entire area of the field-of-view and acquires a full-frame image of that area. It attempts to read a bar code symbol the captured image. If it successfully reads a bar code symbol, then it immediately sends the data out to the user by executing the Data Output procedure and exits. Otherwise, it continues the loop. Notably, upon successful read and prior to executing the Data Output procedure, the Main Task analyzes the decoded data for a "reader programming" command or a sequence of commands. If necessary, it executes the MetroSelect functionality. The Main Task can be canceled by other modules within the system when reacting to other events. For example, the bar code reader of the present disclosure can be re-configured using standard Metrologic configuration methods, such as MetroSelec® and MetroSet®. The MetroSelect functionality is executed during the Main Task.

The MetroSet functionality is executed by the special MetroSet Task. When the Focus RS232 software driver detects a special NULL-signal on its communication lines, it posts the METROSET_ON event to the Application. The Application software responsible for processing this event starts the MetroSet task. Once the MetroSet Task is completed, the scanner returns to its normal operation.

The function of the Plug-In Controller (i.e. Manager) is to read configuration files and find plug-in libraries within the Plug-In and Configuration File Library, and install plug-in into the memory of the operating system, which returns back an address to the Plug-In Manager indicating where the plug-in has been installed, for future access. As will be described in greater detail hereinafter, the Plug-In Development Platform support development of plug-ins that enhance, extend and/or modify the features and functionalities of the image-processing based bar code symbol reading system, and once developed, to upload developed plug-ins within the file system of the operating system layer, while storing the addresses of such plug-ins within the Plug-In and Configuration File Library in the Application Layer.

Other modes of system operation can be readily implemented on the illumination and imaging platform of the present disclosure by making appropriate software system modifications supported by the system.

### Operating System Layer Software Modules Within The Application Layer Of The System Software Architecture Employed In Imaging-Based Bar Code Reader Of The Present Disclosure

The Devices Drivers software modules, which includes trigger drivers, provide a means for establishing a software connection with the hardware-based manually-actuated trigger switch 2C employed on the imaging-based device, an image acquisition driver for implementing image acquisition functionality aboard the imaging-based device, and an IR driver for implementing object detection functionality aboard the imaging-based device.

The Device Drive software modules include: trigger drivers for establishing a software connection with the hardware-based manually-actuated trigger switch 2C employed on the imaging-based bar code symbol reader of the present disclosure; an image acquisition driver for implementing image acquisition functionality aboard the imaging-based bar code symbol reader; and an IR driver for implementing object detection functionality aboard the imaging-based bar code symbol reader.

### Method Of And Apparatus For Modifying and/or Extending System Features And Functions Within A Digital Image Capture and Processing System In Accordance With Principles Of The Present Disclosure

Referring now to Figs. 6 through 7F, the method of and apparatus for extending the standard system features and functions within a digital image capture and processing system of the present disclosure, will now be described below. While it is understond that any of the digital image capture and processing systems described and disclosed herein could be referred to for purposes of illustrating the novel plug-in programming methodology of the present disclosure, described in Figs. 6 through 8, reference will be made to the digital imaging based bar code reading system shown in Figs. 2A through 5 for purposes of illustration, and not limitation.

As indicated in Block A of Fig. 6, the first step involves the "system designer" of the Imaging-based Bar Code Symbol Reading System (having a multi-tier software architecture), determining which "features" of the system (implemented by Tasks called in the Application Layer) and which functions within any given feature, will be modifiable and/or extendable by end-users and/or third-party persons other (than the original designer and the manufacturer, e.g. VARs, end-users, customers et al.) without having detailed knowledge of the system's hardware platform, its communication interfaces with the outside environment, or its user interfaces. This step by the system designer establishes constraints on system modification by others, yet provides degrees of freedom on how the system can be modified to meet custom requirements of end-user applications.

As indicated in Block B of Fig. 6 based on such determinations, the system designer designs and makes the image-processing based bar code reading system of the present disclosure, wherein persons other than the system designer (e.g. end-users and third-parties) are permitted to modify and/or extend the system features and functionalities of the original product/system specified by the system designer (i.e. designer of the original product/system) in Block A.

As indicated in Block C of Fig. 6, persons other than the system designer, then determine which modifiable and/or extendable system features and functions they wish to modify and/or extend to meet a particular set of end-user application requirements.

As indicated in Block D of Fig. 6, for each modifiable feature/function to be modified in the system, persons other than the system designer develop a "plug-in module" (third-party code or "software object") to implement the designed custom system feature, and thereafter they install the plug-in module (i.e. third-party code) within the suitable Library(ies) in the Application Layer of the multi-tier system.

As indicated in Block E of Fig. 6, persons other than the system designer reconfigure the functions associated with each modifiable and/or extendible feature within the system by either sending communications from a host system, or by reading function-reconfiguring bar code symbols.

Having provided a brief overview on the system feature/functionality modification methodology of the present disclosure, it is now in order to describe these method steps in greater detail referring to Fig. 4, and Figs. 6 through 7F, in particular.

In the illustrative embodiment, each plug-in module, stored within the Plug-In and Configuration File Library, shown in Fig. 4, consists of the set of software libraries (object modules) and configuration files. They can be downloaded to the Image-Processing Based Bar Code Symbol Reading System from an external host system, such as Plug-in Development Platform implemented on a host PC, and using various standard or proprietary communication protocols to communicate with the OS layer of the system. In the Image-Processing Based Bar Code Symbol Reading System, this operation is performed by the Metroset task or User Command Manager (see Software Block Diagram) upon reception of the appropriate command from the host system. Once the download is complete, the plug-in files are stored in the file system of the Image-Processing Based Bar Code Symbol Reading System.

The management of all plug-in modules (i.e. third-party code) is performed by the Plug-in Controller shown in Fig. 4. The Plug-in Controller can perform operations such as: load (install) plug-in module from the file system to the executable memory of the Image-Processing Based Bar Code Symbol Reading System and perform dynamic linking of the plug-in libraries with the Application; unload (uninstall) the plug-in module; provide executable address of (i.e. Place Holder for) the plug-in module (i.e. third-party code) to the Application; provide additional information about the plug-in module to the Application, such as the rules of the plug-in engagement as described in the plug-in configuration file.

Any task of the Image-Processing Based Bar Code Symbol Reading System can request information from the Plug-in Controller about a plug-in module and/or request an operation on it. For a set of predetermined features, the Application tasks can request the Plug-in Controller to check the availability of a third-party plug-in module, and if such module is available, install it and provide its executable address as well as the rules of the plug-in engagement. The tasks then can execute it either instead or along with the "standard" module that implements the particular feature. The rules of engagement of the plug-in module, i.e. determination whether the plug-in module should be executed as a replacement or a complimentary module to the "standard" module, can be unique to the particular feature. The rules can also specify whether the complimentary plug-in module should be executed first, prior to the "standard" module, or after. Moreover, the plug-in module, if executed first, can indicate back to the device whether the "standard" module should also be called or not, thus, allowing the alteration of the device's behavior. The programming interfaces are predefined for the features that allow the plug-in functionality, thus, enabling the third-parties to develop their own software for the device.

Consider, as a first and very simple example, the case where the original equipment manufacturer (OEM) of the Image-Processing Based Bar Code Symbol Reading System supplies the system's "standard" Image Pre-Processing Module (i.e. "original product code" of executable binary format). Typically, this Image Pre-Processing Module would be executed by the Main Task of the system, after the system acquires an image of an object in the field of view (FOV). In accordance with the principles of the present disclosure, the customer can provide its own image preprocessing software as a plug-in module (i.e. "third-party code") to the multi-tier software-based system. Notably, the third-party code is typically expressed in executable binary format. The plug-in can be described in a "Image Preprocessing Plug-in Configuration File", having a format, for example, as expressed below:

```
        // Image Preprocessing Configuration File
        //type param library function
        IMGPREPR: libimgprepr_plugin.so.1->PluginImgprepr
        IMGPREPR_PROGMD: libimgprepr_plugin.so.1->PluginImgpreprProgmd
        IMGPREPR _PROGBC: libimgprepr_plugin.so.1->PluginImgpreprProgbc
```

The flow chart set forth in Fig. 16B illustrates the logic of the Image Preprocessing plug-in.

Consider, as a second, more interesting example, the Image Processing and Barcode Decoding Plug-in described in Fig. 7C. The original equipment manufacturer of the Image-Processing Based Bar Code Symbol Reading System supplies the system's "standard" Image Processing and Barcode Decoding Module, which is normally executed by the Main Task after the system acquires an image, as indicated in Fig. 7A. In accordance with the principles of the present disclosure, the customer can provide its own image processing and barcode decoding software as a plug-in module to the multi-tier software-based system. The plug-in can be described in a "Image Processing and Barcode Decoding Plug-in Configuration File", having a format, for example, as expressed below:

```
        // Decode Plug-in Configuration File
        //type param library function
        DECODE: 0x02: libdecode_plugin.so.1 ->PluginDecode
```

wherein "DECODE" is a keyword identifying the image processing and barcode decoding plug-in; wherein "0x02" is the value identifying the plug-in's rules of engagement; wherein "libdecode_plugin.so.1" is the name of the plug-in library in the device's file system; and wherein "PluginDecode" is the name of the plug-in function that implements the customer-specific image processing and barcode decoding functionality. The individual bits of the value "param", which is used as the value indicating the rules of this particular plug-in's engagement, can have the following meaning:
The value "0x02", therefore, means that the customer plug-in is a complimentary, not a replacement, module (the bit "0" is 0), and it should be executed after the execution of the standard module (bit "1" is 1).

Consider, as a third example, the Image Processing and Barcode Decoding Plug-in described in Fig. 7E. The original equipment manufacturer of the Image-Processing Based Bar Code Symbol Reading System supplies the system's "standard" Image Processing and Barcode Decoding Module, which is normally executed by the Main Task after the system acquires an image as indicated in Fig. 7A. In accordance with the principles of the present disclosure, the customer can provide its own image

| | |
|---|---|
| bit | meaning |
| 0 | 0 = compliment standard; 1 = replace standard |
| 1 | (if bit0==0) 0 = call before standard func; 1 = call after standard func |
| 2 | reserved |
| ... | ... |

processing and barcode decoding software as a plug-in module to the multi-tier software-based system. The plug-in can be described in a "Image Processing and Barcode Decoding Plug-in Configuration File", having a format, for example, as expressed below:

```
        // Data Formatting Plug-in Configuration File
        //type param library function
        PREFORMAT: libformat_plugin. so.1->PluginPreformat
        FORMAT PROGMD: libformat_plugin.so.1->PluginFormatProgmd
        FORMAT_PROGBC: libformat_plugin.so.1->PluginformatProgbc
```

The block-diagram set forth in Fig. 16E illustrates the logic of the Data Formatting Procedure plug-in.

The Plug-Ins described above provide a few examples of the many kinds of plug-ins (objects) that be developed so that allowed features and functionalities of the system can be modified by persons other than the system designer, in accordance with the principles of the present disclosure. Other system features and functionalities for which Plug-in modules can be developed and installed within the Image-Processing Based Bar Code Symbol Reading System include, but are not limited to, control over functions supported and performed by the following systems: the IR-based Object Presence and Range Detection Subsystem 12; the Multi-Mode Area-type Image Formation and Detection (i.e. camera) Subsystem 13; the Multi-Mode LED-Based Illumination Subsystem 14; the Automatic Light Exposure Measurement and Illumination Control Subsystem 15; the Image Capturing and Buffering Subsystem 16; the Multi-Mode Image-Processing Bar Code Symbol Reading Subsystem 17; the Input/Output Subsystem 18; the manually-actuatable trigger switch 2C; the System Mode Configuration Parameter Table 70; the System Control Subsystem 18; and any other subsystems which may be integrated within the Image-Processing Based Bar Code Symbol Reading System.

Having described the structure and function of Plug-In Modules that can be created by persons other than the OEM system designer, it is now in order to describe an illustrative embodiment of the Plug-In Development Platform of the present disclosure with reference to Figs. 4 and 5.

In the illustrative embodiment, the system designer/OEM of the system (e.g. Metrologic Focus™1690 Image-Processing Bar Code Reader) will provide the plug-in developer with a CD that contains, for example, the following software tools:
▪ Arm Linux Toolchain for Linux PC
   This directory contains the Arm Linux cross-compiling toolchain package for IBM-compatible Linux PC.
▪ Arm Linux Toolchain for Cygwin
   This directory contains the Arm Linux cross-compiling toolchain package for IBM-compatible Windows PC. The Cygwin software must be installed prior to the usage of this cross-compiling toolchain.
▪ Plug-in Samples
   This directory contains sample plug-in development projects. The plug-in software must be compiled on the IBM-compatible Linux PC using the Arm Linux Toolchain for Linux PC or on Windows PC with installed Cygwin software using Arm Linux Toolchain for Cygwin.
▪ FWZ Maker
   This directory contains the installation package of the program FWZ Maker for Windows PC. This program is used to build the FWZ-files for downloading into the Focus 1690 scanner.
▪ Latest Metrologic ® Focus™ Software
   This directory contains the FWZ-file with the latest Metrologic® Focus™ scanner software.

The first step of the plug-in software development process involves configuring the plug-in developer platform by installing the above tools on the host/developer computer system. The next step involves installing system software onto the Image-Processing Bar Code Reader, via the host plug-in developer platform using a communications cable between the communication ports of the system and the plug-in developer computer, shown in Figs. 10 and 11.

To develop plug-in software, a corresponding shared library can be developed on the plug-in developer platform (i.e. the Linux PC) or in Windows Cygwin, and then the proper plug-in configuration file. The plug-in configuration file is then be loaded to the "/usr" directory in the case of developing a plug-in for example, an image capture and processing device, such as Metrologic's Focus™ image-processing bar code reader. In this illustrative embodiment, each line of the plug-in configuration file contains information about a plug-in function in the following format:
*plug-in type: parameter: filename* ->*function_name*
wherein *plug-in type* is one of the supported plug-in type keywords, followed by the field separator ":";
wherein *parameter* is a number (could be decimal or hex, if preceded with 0x), having a specific and unique meaning for some plug-in functions. The parameter is also called a "call-mode", for it can provide some specific information on how the plug-in should be called. The parameter is not required and can be omitted. If specified, then the parameter must be followed by the field separator ":";
wherein *filename* is the name of the shared library, followed by the filename separator "->". The filename can contain a full-path to the library. If the path is omitted, the library is assumed to be located in either "/usr/local/lib" or "/usr/lib/" directory in the Focus scanner. It is therefore important to make sure that the shared library is loaded to the correct directory in the scanner, as specified by the plug-in configuration file; and
wherein *function_name* is the name of the corresponding plug-in C function.

Notably, that the plug-in configuration file can also contain single-line C-style comments.

It is within the discretion of the plug-in developer to decide which plug-in functions (of those supported by the system designer) should be included in the plug-in module (i.e. "object"). Once the shared library is built and configuration file is prepared on the plug-in development platform (illustrated in Figs. 4 and 5), the plug-in developer can then generate the FWZ file and include the configuration file and the shared library in it using FWZ Maker program on the Windows PC. Thereafter, the FWZ file can be downloaded to Metrologic's Focus™ Image-processing bar code reader using, for example, Metrologic's Metroset program's Flash Utility tool.

In the case of installing plug-in software for Metrologic's Focus™ Image-processing bar code reader, it is recommended not to use dynamic memory allocation and have static buffers rather than allocating them dynamically. As far as the filesystem is concerned, if necessary to store data in a file, then the locations such as "/usr/" and "/usr/local" are recommended for storing data in non-volatile Flash memory; the "/tmp" directory can be used to store data in RAM.

### Programming Barcodes and Programming Modes in the Digital Image Capture and Processing Sytstem

In the illustrative embodiment, configuration of image-processing bar code reader of the present disclosure can be changed via scanning special programming barcodes, or by sending equivalent data to the reader from the host computer (i.e. plug-in development computer). Programming barcodes are usually Code 128 symbols with the Fn3 codeword.

When scanning a programming barcode, the reader may or may not be in its so-called programming mode. When the reader is not in its programming mode, the effect of the programming barcode is supposed to be immediate. On the other hand, when the reader is in its programming mode, the effect of all the programming barcodes read during the programming mode should occur at the time when the reader exits the programming mode.

There is a special set of programming barcodes reserved for the plug-in software configuration purposes. These barcodes have at least 4 data characters, and the first three data characters are "990". It is recommended (but not required) that the Decode Plug-in use programming barcodes having 6 characters long, starting with "9900xx". It is recommended (but not required) that the Image Preprocessing Plug-in use programming barcodes having 6 characters long, starting with "9901xx". It is recommended (but not required) that the Formatting Plug-in use programming barcodes having 6 characters long, starting with "9902xx".

Once a plug-in module has been developed in accordance with the principles of the present disclosure, the plug-in can be uninstalled by simply downloading an empty plug-in configuration file. For example, to uninstall a Decode plug-in, download an empty "decode.plugin" file into the "/usr" directory of the file system within the OS layer, shown in Fig. 10.

### Details about the Decode Plug-in of the Illustrative Embodiment

The purpose of the Decode Plug-in is to provide a replacement or a complimentary barcode decoding software to the standard barcode decoding provided on the system. The Decode Plug-in can have the following plug-in functions:
DECODE; DECODE_ENABLE2D; DECODE_PROGMD; DECODE_PROGBC.

### DECODE Plug-in Function

This function is called to perform a barcode decoding from the given image in memory. Image is represented in memory as a two-dimensional array of 8-bit pixels. The first pixel of the array represents the upper-left corner of the image.

Function prototype:

```
 int /* Return: number of decoded barcodes; negative if error */
 (*PLUGIN_DECODE)(
 void *p_image, /* Input: pointer to the image */
 int size_x, /* Input: number of columns */
 int size_y, /* Input: number of rows */
 int pitch, /* Input: row size, in bytes */
 DECODE_RESULT *p_decode_results, /* Output: decode results */
 int max_decodes, /* Input: maximum decode results allowed */
 int *p_cancel_flag); /* Input: if not NULL, pointer to the cancel flag */
```

Note that p_decode_results points to the location in memory where the Decode plug-in function should store one or more results of barcode decoding (if of course the plug-in successfully decodes one or more barcodes in the given image) in the form of the array of DECODE_RESULT structures. The maximum number of allowed decode results (i.e. the size of the array) is given in max_decodes. The plug-in must return the number of successfully decoded barcodes (i.e. the number of populated elements in the array p_decode_results), or a negative number in case of an error.

If p_cancel_flag is not NULL, it points to the integer flag (called "Cancel flag") that indicates whether the decoding process should continue or should stop as soon as possible. If the flag is 0, the decoding process can continue. If the flag is not zero, the decoding process must stop as soon as possible. The reason for aborting the decoding process could be, for example, a time out. It is recommended to check the Cancel flag often enough so that the latency on aborting the decoding process would be as short as possible.

Note that the Cancel flag is not the only way the Decoding plug-in (or any plug-in for that matter) can be aborted. Depending on the circumstances, the system can decide to abruptly kill the thread, in which the Decoding plug-in is running, at any time.

### Structure DECODE_RESULT

The structure DECODE_RESULT has the following format:

```
 #define MAX_DECODED_DATA_LEN 4096
 #define MAX_SUPPL_DATA_LEN 128
 typedef struct {
  int x;
  int y;
 } BC_POINT;
 typedef struct {
  BC_POINT BCPts[4]; /* Coordinates of the 4 corners of the barcode */
 } BC_BOUNDS;
```

The order of the array elements (i.e. corners) in BC_BOUNDS structure is as follows:
0 - top left
1 - top right
2 - bottom right
3 - bottom left

```
 typedef struct {
 int decode_result_index; /* index of the decode result, starting from 0 */
 int num_decode_results; /* total number of decode results minus 1 (i.e. 0-based) */
 char SymId[32]; /* the symbology identifier characters */
 int Symbology; /* the decoded barcode's symbology identifier number */
 int Modifier; /* additional information of the decoded barcode */
 int DecId; /* reserved */
 int Class; /* 1 for 1D, 2 for 2D */
 unsigned char Data[MAX_DECODED_DATA_LEN]; /* decoded data - may contain null chars */
 int Length; /* number of characters in the decoded barcode */
 unsigned char SupplData[MAX_SUPPL_DATA_LEN]; /* supplemental code's data */
 int SupplLength; /* number of characters in the supplemental code's data */
 unsigned char LinkedData[MAX_DECODED_DATA_LEN];
 int LinkedLength;
 BC_BOUNDS C_Bounds; /* Bounds for the primary barcode */
 BC_BOUNDS S_Bounds; /* Bounds for the supplemental barcode */
 } DECODE_RESULT;
```

The first two members of each populated DECODE_RESULT structure must contain a zero-based index of the decode result in the array (i.e. the first decode result must have decode_result_index = 0, the second must have decode_result_index = 1, and so on) and the zero-based total number of successfully decoded barcodes (which should equal the returned value minus 1).

The SymId member of DECODE_RESULT structure can have a string of up to 31 null-terminated characters describing the barcode symbology. It is used for informational purposes only. The following values are recommended for some known barcode symbologies.
- "AZTEC": Aztec
- "CBR": Codabar
- "CBK_A": Codablock A
- "CBK_F": Codablock F
- "C11": Code 11
- "C128": Code 128
- "C39": Code 39
- "C93": Code 93
- "DM": Datamatrix
- "S205": Straight 2 of 5
- "I2O5": Interleaved 2 of 5
- "MC": MexiCode
- "PDF": Code PDF
- "QR": Code QR
- "RSS-E": Code RSS-E
- "RSS-EST": Code RSS-EST
- "RSS14-LIM": Code RSS Limited
- "RSS14": Code RSS-14
- "RSS14-ST": Code RSS-ST
- "UPC": Code UPC/EAN

The Symbology member of the DECODE_RESULT structure must contain the identification (id) of the decoded barcode symbology. The following symbology ids must be used for the known barcode symbologies:
- MBCD_SYM_C128: Code 128
- MBCD_SYM_C39: Code 39
- MBCD_SYM_ITF: Interleaved 2 of 5
- MBCD_SYM_C93: Code 93
- MBCD_SYM_CBR: Codabar
- MBCD_SYM_UPC: Code UPC/EAN
- MBCD_SYM_TPEN: Telepen
- MBCD_SYM_RSS14: Code RSS-14
- MBCD_SYM_RSSE: Code RSS-E
- MBCD_SYM_RSSL: Code RSS Limited
- MBCD_SYM_MTF: Matrix 2 of 5
- MBCD_SYM_ATF: Airline 2 of 5
- MBCD_SYM_STF: Straight 2 of 5
- MBCD_SYM_MPLY: MSI Plessey
- MBCD_SYM_C11: Code 11
- MBCD_SYM_PDF: Code PDF
- MBCD_SYM_PN: Postnet
- MBCD_SYM_DM: Datamatrix
- MBCD_SYM_MC: MaxiCode
- MBCD_SYM_QR: Code QR
- MBCD_SYM_AZ: Aztec
- MBCD_SYM_MICROPDF: MicroPDF
- MBCD_SYM_CBLA: 1Codablock A
- MBCD_SYM_CBLF: Codablock F
- MBCD_SYM_UNKNOWN: User-defined symbology

The Modifier member of the DECODE_RESULT structure contains additional information about the decoded barcode. The values of the Modifier are usually bit-combinatory. They are unique for different symbologies, and many symbologies do not use it all. If the Modifier is not used, it should be set to 0. For some symbologies that support Modifier, the possible values are presented below.

| Coupon Modifier | |
|---|---|
| MBCD_MODIFIER_COUP | Coupon code |
| | |
| UPC Modifier Bit Flag Constants | |
| MBCD_MODIFIER_UPCA | UPC-A |
| MBCD_MODIFIER_UPCE | UPC-E |
| MBCD_MODIFIER_EAN8 | EAN-8 |
| MBCD_MODIFIER_EAN13 | EAN-13 |
| MBCD_MODIFIER_SUPP2 | 2-digit supplement |
| MBCD_MODIFIER_SUPP5 | 5 digit supplement |
| Code 128 Modifier Bit Flag Constants | |
| MBCD_MODIFIER_C128A | Code 128 with A start character |
| MBCD_MODIFIER_C128B | Code 128 with B start character |
| MBCD_MODIFIER_C128C | Code 128 with C start character, but not an EAN128 |
| MBCD_MODIFIER_EAN128 | EAN-128 |
| MBCD_MODIFIER_PROG | Programming label (overrides all other considerations) |
| MBCD_MODIFIER_AIM_AI | Code 128 with AIM Application indicator |
| | |
| Code 39 Modifier Bits Flag Constands | |
| | |
| MBCD_MODIFIER_ITPHARM | Italian Pharmaceutical |
| | |
| Codabar Modifier Bit Flag Constants | |
| | |
| MBCD_MODIFIER_CBR_DF | Double-Field Codabar |
| | |
| POSTNET iModifier Bit Flag Constants | |
| MBCD_MODIFIER_PN | POSTNET |
| MBCD_MODIFIER_JAP | Japan Post |
| MBCD_MODIFIER_AUS | Australia Post |
| MBCD MODIFIER PLANET PLANET | |
| MBCD MODIFIER_RM | Royal Mail |
| MBCD_MODIFIER_KIX | KIX Code |
| MBCD_MODIFIER_UPU57 | UPU (57-bar) |
| MBCD_MODIFIER_UPU75 | UPU (75-bar) |
| | |
| Datamatrix Modifier Bit Flag Constants | |
| MBCD_MODIFIER_ECC140 | ECC 000-140 |
| MBCD MODIFIER ECC200 | ECC 200 |
| MBCD_MODIFIER_FNC15 | ECC 200, FNC1 in first or fifth position |
| MBCD_MODIFIER_FNC26 | ECC 200, FNC1 in second or sixth position |
| MBCD MODIFIER_ECI | ECC 200, ECI protocol implemented |
| MBCD_MODIFIER_FNC15_ECI | ECC 200, FNC1 in first or fifth position, ECI protocol |
| MBCD_MODIFIER_FNC26_ECI | ECC 200, FNC1 in second or sixth position, ECI protocol |
| MBCD_MODIFIER_RP | Reader Programming Code |
| | |
| MaxiCode Modifier Bit Flag Constants | |
| MBCD_MODIFIER_MZ | Symbol in Mode 0 |
| MBCD_MODIFIER_M45 | Symbol in Mode 4 or 5 |
| MBCD_MODIFIER_M23 | Symbol in Mode 2 or 3 |
| MBCD_MODIFIER_M45_ECI | Symbol in Mode 4 or 5, ECI protocol |
| MBCD_MODIFIER_M23_ECI | Symbol in Mode 2 or 3, ECI protocol |

The DecId member of the DECODE_RESULT structure is currently not used and should be set to 0.

The Class member of the DECODE_RESULT structure must be set either to 1 or 2. If the decoded barcode is a regular linear barcode, such as UPC, Code 39, RSS, etc., the Class should be set to 1. If the decoded barcode is a 2D symbology, such as Code PDF, Datamatrix, Aztec, MaxiCode, etc., the Class should be set to 2.

The Data member of the DECODE_RESULT structure contains the decoded data. It can contain up to MAX_DECODED_DATA_LEN bytes of data.

The Length member of the DECODE_RESULT structure specifies how many bytes of decoded data are stored in Data.

The SupplData member of the DECODE_RESULT structure contains the data decoded in a supplemental part of the barcode, such as a coupon. It can contain up to MAX_DECODED_DATA_LEN bytes of data.

The SupplLength member of the DECODE RESULT structure specifies how many bytes of decoded data are stored in SupplData.

The LinkedData member of the DECODE_RESULT structure contains the data decoded in a secondary part of the composite barcode, such as RSS/PDF composite. It can contain up to MAX_DECODED_DATA_LEN bytes of data.

The LinkedLength member of the DECODE_RESULT structure specifies how many bytes of decoded data are stored in LinkedData.

The C_Bounds and S_Bounds members of the DECODE_RESULT structure are currently not used.

### DECODE Plug-in Call-Mode

The DECODE plug-in can have the following call-mode values:

```
 bit value
 0 <-- 0 = compliment standard; 1 = replace standard
 1 <-- (if bit0==0) 0 = call before standard function; 1 = call after standard function
```

The default call-mode value is 0, meaning that by default, the DECODE plug-in is considered a complimentary module to standard Focus barcode decoding software and is executed before the standard function. In this case, the standard function will be called only if the result returned from DECODE plug-in is not negative and less than max_decodes.

### DECODE ENABLE2D Plug-in Function

This function is called to notify the plug-in that the scanner enters a mode of operation in which decoding of 2D symbologies (such as PDF417, Datamatrix, etc.) should be either allowed or disallowed. By default, the decoding of 2D symbologies is allowed.

### Function prototype:

```
 void
 (*PLUGIN_ENABLE2D)(int enable); /* Input: 0 = disable; 1 = enable */
```

For example, when the Focus scanner is configured to work in linear mode (as opposed to omnidirectional mode), the decoding of 2D symbologies is disallowed.

### DECODE_PROGMD Plug-in Function

This function is called to notify the plug-in that the scanner enters a programming mode.

### Function prototype:

```
 void
 (*PLUGIN_PROGMD)(int progmd); /* Input: 1 = enter; 0 = normal exit; (-1) = abort */
```

### DECODE_PROGBC Plug-in Function

This function is called to notify the plug-in that the scanner just scanned a programming barcode, which can be used by the plug-in for its configuration purposes.

### Function prototype:

```
 int /* Return: 1 if successful; 0 if barcode is invalid; negative if error */
 (*PLUGIN_PROGBC)(unsigned char *bufferptr,
          int data_len);
```

### Details About The Image Preprocessing Plug-In of the Illustrative Embodiment of the Present Disclosure

The purpose of the Image Preprocessing Plug-in is to allow the plug-in to perform some special image processing right after the image acquisition and prior to the barcode decoding. The Image Preprocessing Plug-in can have the following plug-in functions:
IMGPREPR; IMGPREPR_PROGMD; IMGPREPR_PROGBC.

### IMGPREPR Plug-in Function

This function is called to perform an image preprocessing. The image is represented in memory as a two-dimensional array of 8-bit pixels. The first pixel of the array represents the upper-left corner of the image.
Function prototype:

```
 int /* Return: 1 if preprocessing is done; 0 if not; neg. if error */
 (*PLUGIN_IMGPREPR)(
 void *p_image, /* Input: pointer to the image */
 int size_x, /* Input: number of columns */
 int size_y, /* Input: number of rows */
 int pitch, /* Input: row size, in bytes */
 void **pp_new_image, /* Output: pointer to the new image */
 int *p_new_size_x, /* Output: new number of columns */
 int *p_new_size_y, /* Output: new number of rows */
 int *p_new_pitch); /* Output: new row size, in bytes */
```

If the IMGPREPR plug-in function is successful, it should return 1 and store the address of the new image in the location in memory pointed to by pp_new_image. The new image dimensions should be stored in the locations pointed to by p_new_size_x, p_new_size_y, and p_new_pitch.

If the preprocessing is not performed for whatever reason, the IMGPREPR plug-in function must return 0.

The negative returned value indicates an error.

### IMGPREPR_PROGMD Plug-in Function

This function is called to notify the plug-in that the scanner enters a programming mode.

### Function prototype:

```
 void
 (*PLUGIN_PROGMD)(int progmd); /* Input: 1 = enter; 0 = normal exit; (-1) = abort */
```

IMGPREPR_PROGBC Plug-in Function

This function is called to notify the plug-in that the scanner just scanned a programming barcode, which can be used by the plug-in for its configuration purposes.

### Function prototype:

```
 int /* Return: 1 if successful; 0 if barcode is invalid; negative if error */
 (*PLUGIN_PROGBC)(unsigned char *bufferptr,
          int data_len);
```

### Details about Formatting Plug-in of the Illustrative Embodiment

The purpose of the Formatting Plug-in is to provide a replacement or complimentary software to the standard data formatting software. The Formatting Plug-in configuration file must have the name "format.plugin" and loaded in the "/usr" directory in the scanner.
The Formatting Plug-in can currently have the following plug-in functions:
PREFORMAT; FORMAT_PROGMD; FORMAT_PROGBC.

### PREFORMAT Plug-in Function

This function is called to perform a necessary transformation of the decoded barcode data prior to the data being actually formatted and sent out.

### Function prototype:

```
 int /* Return: 1 ifpreformat is done; 0 if not; neg. if error */
 (*PLUGIN_PREFORMAT)(
 DECODE_RESULT *decode_results, /* Input: decode results */
 DECODE_RESULT *new_decode_results); /* Output: preformatted decode results */
```

If the PREFORMAT plug-in function is successful, it should return 1 and store the new decode result in the location in memory pointed to new_decode_results.

If the preformatting is not performed for whatever reason, the PREFORMAT plug-in function must return 0.

The negative returned value indicates an error.

For the details about the DECODE_RESULT structure, please refer to the section DECODE Plug-in Function.

### FORMAT_PROGMD Plug-in Function

This function is called to notify the plug-in that the scanner enters a programming mode.

### Function prototype:

```
 void
 (*PLUGIN_PROGMD)(int progmd); /* Input: 1 = enter; 0 = normal exit; (-1) = abort */
```

### FORMAT_PROGBC Plug-in Function

This function is called to notify the plug-in that the scanner just scanned a programming barcode, which can be used by the plug-in for its configuration purposes.

### Function prototype:

```
 int /* Return: 1 if successful; 0 if barcode is invalid; negative if error */
 (*PLUGIN_PROGBC)(unsigned char *bufferptr,
          int data_len);
```

The method of system feature/functionality modification described above can be practiced in diverse application environments which are not limited to image-processing based bar code symbol reading systems described hereinabove. In general, any image capture and processing system or device that supports an application software layer and at least an image capture mechanism and an image processing mechanism would be suitable for the practice of the present disclosure. Thus, image-capturing cell phones, digital cameras, video cameras, and portable or mobile computing terminals and portable data terminals (PDTs) are all suitable systems in which the present disclosure can be practiced.

Also, it is understood that the application layer of the image-processing bar code symbol reading system of the present disclosure, illustrated in Fig. 4, with the above-described facilities for modifying system features and functionalities using the plug-in development techniques described above, can be ported over to execute on conventional mobile computing devices, PDAs, pocket personal computers (PCs), and other portable devices supporting image capture and processing functions, and being provided with suitable user and communication interfaces.

The image capture and processing system of the present disclosure described above can be implemented on various hardware computing platforms such as Palm®, PocketPC®, MobilePC®, JVM®, etc. equipped with CMOS sensors, trigger switches etc. In such illustrative embodiments, the 3-tier system software architecture of the present disclosure can be readily modified by replacing the low-tier Linux OS (described herein) with any operating system (OS), such as Palm, PocketPC, Apple OSX, etc.

Furthermore, provided that the mid-tier SCORE subsystem described hereinabove supports a specific hardware platform equipped with an image sensor, trigger switch of one form or another etc., and that the same (or similar) top-tier "code symbol reading system" application is compiled for that platform, any universal (mobile) computing device can be transformed into an image capture and processing system having the bar code symbol reading functionalities of the system shown in Figs 2A through 5, and described in detail hereinabove. In such alternative embodiments of the present disclosure, third-party customers can be permitted to write their own software plug-ins to enhance or modify the behavior of the image capture and processing device, realized on the universal mobile computing platform, without any required knowledge of underlying hardware platform, communication protocols and/or user interfaces.

### Technique For Third-Party Programming The Modular Software Architecture of the Image Capture and Processing System For Advanced Functionality

As indicated above, management of all plug-in modules is performed by the Plug-in Controller, shown in Fig. 4, which can perform operations such as, for example: loading (install) plug-in modules from the file system to the executable memory of the System and performing dynamic linking of the plug-in libraries with the Application; unloading (uninstalling) the plug-in module; providing executable addresses of (i.e. Place Holders for) the plug-in modules (i.e. third-party code) to the Application; and providing additional information about the plug-in module to the Application, such as the rules of the plug-in engagement as described in the plug-in configuration file.

For a set of predetermined features, Application tasks can request the Plug-in Controller to check the availability of a third-party plug-in module, and if such module is available, install it and provide its executable address as well as the rules of the plug-in engagement. The tasks then can execute it either instead or along with the "standard" module that implements the particular feature. The rules of engagement of the plug-in module, i.e. determination whether the plug-in module should be executed as a replacement or a complimentary module to the "standard" module, can be unique to the particular feature. The rules can also specify whether the complimentary plug-in module should be executed first, prior to the "standard" module, or after. Moreover, the plug-in module, if executed first, can indicate back to the device whether the "standard" module should also be called or not, thus, allowing the alteration of the device's behavior. The programming interfaces are predefined for the features that allow the plug-in functionality, thus, enabling the third-parties to develop their own software for the device.

As described above, the configuration file for each plug-in module includes programmable parameters, indicated by "param", whose individual bit values are used to indicate the rules of the plug-in's engagement, that is, for example, whether or not the customer's plug-in is a complimentary module, and not a replacement module, and therefore, that the plug-in module should be executed after the execution of the standard module.

While the use of the "param" bits in the plug-in module configuration file described above is capable of indicating the execution of a plug-in module after a standard module, there are many applications which would benefit greater by adding more complex programming logic to the plug-in configuration file so that the customer can program more complex system, behaviors on the system, by chaining or sequencing multiple third-party plug-ins of the same type (e.g. decoding or formatting).

Specifically, by providing "conditional" programming logic (i.e. a simple script containing conditional programming logic) in the configuration file that controls (i.e. conditions) the ordering or chaining of multiple third-party plug-ins in the digital image capture and processing system, the customer can program more complex system behaviors into the digital image capture and processing system. For example, during the decode stage, one can configure multiple plug-ins and allow them to execute in parallel or sequential manner. During the formatting stage, the output of one plug-in can provide the input into the next or subsequent plug-in, and so on. By providing such conditional logic to the configuration file for multiple third-party plug-ins, third-parties enable interaction and configuration between multiple plug-ins, and achieve enhanced system functionality.

Such improvements to plug-in configuration files on the modular software development platform of the present disclosure, will allow individual third-party plug-in code to interact and communicate with one another according to various types of input/output relationships, thereby enhancing imager functionality. In an illustrative embodiment, when using this technique, multiple (e.g. up to ten) application plug-ins of the same type (e.g. decoding or formatting) can be chained, sequenced or ordered together to provide more functionality than the plug-ins could offer individually. Also, such plug-ins can be easily installed, deleted, sequenced and enabled/disabled, as described hereinabove.

As an illustrative example, consider the case where three independent plug-ins (e.g. a driver's license parsing plug-in, a boarding pass parsing plug-in, and a TSA security plug-in) are loaded into memory and then configured (by their configuration file) to interact differently. The configuration file that controls the interaction of these three plug-ins will include "conditional" programming logic that might have one or more IF [ ], THEN [ ] statements, such as, for example:
(a) IF driver's license successfully parses, then skip boarding pass.
   THEN TSA security plug-in stores First Name and Last Name in memory bank with no host output.
(b) IF driver's license does not successfully parse, THEN continue to boarding pass.
   THEN TSA security plug-in stores First Name and Last Name from boarding pass in memory bank, with no host output.
(c) WHEN both memory banks of TSA security plug-in are full, then compare names.
   IF a match occurs, THEN activate Beep sound and flash green LED.
   IF no match occurs, THEN activate Razz sound and flash red LED.
   Clear memory banks after action.

As described hereinabove, plug-in functionality can enable numerous functions across any digital image capture and processing system in accordance with the present disclosure, including, for example: (i) extraction of data from an image (bar code reading, font recognition, mark recognition, pattern recognition, color matching, etc.); (ii) alteration of the format of data extracted from an image prior to sending it to the host system; (iii) emulation of competitive scanner configuration by providing a translation library that looks at incoming scanned data and if it matches a competitive programming command, then translate that into the target command so that the system can respond appropriately; (iv) alteration of the user response (e.g. beep/LED/vibration) based on the success, failure or steps triggered by any given plug-in module.

The use of plug-in chaining on the image capture and processing system has many applications involving driver's license parsing, motor vehicle parsing, coupon parsing, pharmaceutical document parsing, etc.

Several key advantages of using the plug-in architecture of the digital image capture and processing system of the illustrative embodiment include: (i) the ability to individually add/remove software programs without modifying core operating firmware; (ii) the ability for independently developed software programs to interact with one another given a set of API/protocol to follow; and (iii) the ability to uniquely activate/license the software programs based on a unique device identifier such as a product serial number or product group ID.

### Some Modifications Which Readily Come To Mind

While CMOS image sensing array technology was described as being used in the preferred embodiments of the present disclosure, it is understood that in alternative embodiments, CCD-type image sensing array technology, as well as other kinds of image detection technology, can be used.

The bar code reader design described in great detail hereinabove can be readily adapted for use as an industrial or commercial fixed-position bar code reader/imager, having the interfaces commonly used in the industrial world, such as Ethernet TCP/IP for instance. By providing the system with an Ethernet TCP/IP port, a number of useful features will be enabled, such as, for example: multi-user access to such bar code reading systems over the Internet; control of multiple bar code reading system on the network from a single user application; efficient use of such bar code reading systems in live video operations; web-servicing of such bar code reading systems, i.e. controlling the system or a network of systems from an Internet Browser; and the like.

While the illustrative embodiments of the present disclosure have been described in connection with various types of bar code symbol reading applications involving 1-D and 2-D bar code structures, it is understood that the present disclosure can be use to read (i.e. recognize) any machine-readable indicia, dataform, or graphically-encoded form of intelligence, including, but not limited to bar code symbol structures, alphanumeric character recognition strings, handwriting, and diverse dataforms currently known in the art or to be developed in the future. Hereinafter, the term "code symbol" shall be deemed to include all such information carrying structures and other forms of graphically-encoded intelligence.

Also, imaging-based bar code symbol readers of the present disclosure can also be used to capture and process various kinds of graphical images including photos and marks printed on driver licenses, permits, credit cards, debit cards, or the like, in diverse user applications.

It is understood that the image capture and processing technology employed in bar code symbol reading systems of the illustrative embodiments may be modified in a variety of ways which will become readily apparent to those skilled in the art of having the benefit of the novel teachings disclosed herein.

## Claims

1. A method of modifying and/or extending the standard features and functions of a digital image capture and processing system, said method comprising the steps of:
(a) providing said digital image capture and processing system having a set of standard features and functions, and a computing platform including (i) memory (37) for storing pieces of original product code written by the original designers of said digital image capture and processing system, and (ii) a microprocessor (36) for running one or more applications by calling and executing pieces of said original product code in a particular sequence, so as support said set of standard features and functions which characterize a standard behavior of said digital image capture and processing system,
wherein said one or more pieces of original product code have a set of place holders into which third-party product code can be inserted or plugged by third parties, including value-added resellers (VARs), original equipment manufacturers (OEMs), and also end-users of said digital image capture and processing system; and
(b) plugging multiple pieces of third-party code into said set of place holders, so as operate to modify and/or extend the features and functions of said digital image capture and processing system, and thereby modify or extend the standard behavior of said digital image capture and processing system into a custom behavior for said digital image capture and processing system (16);
wherein said multiple pieces of third-party code includes a configuration file having conditional programming logic that controls the ordering or chaining of said multiple plug-ins in said digital image capture and processing system (16).

2. The method of claim 1, wherein said one or more pieces of original product code and said third-party product code comprises executable binary code maintained in one or more libraries; and wherein said memory comprises a memory architecture having different kinds of memory, each having a different access speed and performance characteristics.

3. The method of claim 1, wherein step (b) further comprises an end-user or third-party, such a value-added reseller (VAR) or original equipment manufacturer (OEM), writing said multiple pieces of third-party code according to specifications set by said original system designers.

4. The method of claim 1, wherein step (a) further comprises integrating or embodying said digital image capture and processing system into a third-party product selected from the group consisting of image-processing based bar code symbol reading systems (1), portable data terminals (PDTs), mobile phones, computer mice-type devices, personal computers, keyboards, consumer appliances, automobiles, ATMs, vending machines, reverse-vending machines, retail POS-based transaction systems, 2D or 2D digitizer, and CAT scanning systems, automobile identification systems, package inspection systems, and personal identification systems.

5. The method of claim 1, which further comprises after step (b), an end-user using said digital image capture and processing system to form and detect one or more digital images of an object with said digital camera subsystem, and wherein said digital image processing subsystem processes said one or more digital images so as to extract data from said one or more digital images for bar code reading, font recognition, mark recognition, pattern recognition, and/or color matching.

6. A digital image capture and processing system having a set of standard features and functions, and a set of custom features and functions that satisfy customized end-user application requirements, said digital image capture and processing system comprising:
a digital camera subsystem for projecting a field of view (FOV) upon an object to be imaged in said FOV, and detecting imaged light reflected off the object during illumination operations in an image capture mode in which one or more digital images of the object are formed and detected by said digital camera subsystem;
a digital image processing subsystem for processing said one or more digital images and producing raw or processed data, or recognizing or acquiring information graphically represented in said one or more digital images, and producing output data representative of said recognized information;
an input/output subsystem for transmitting said output data to an external host system or other information receiving or responding device;
a system control subsystem for controlling and/or coordinating the operation of said subsystems above; and
a computing platform for supporting the implementation of one or more of said subsystems above, and the features and functions of said digital image capture and processing system;
said computing platform including (i) memory for storing multiple pieces of original product code written by the original designers of said digital image capture and processing system, and (ii) a microprocessor for running one or more applications by calling and executing pieces of said original product code in a particular sequence, so as to support a set of standard features and functions which characterize a standard behavior of said digital image capture and processing system;
wherein said multiple pieces of original product code have a set of place holders into which multiple pieces of third-party product code can be inserted or plugged by third parties, including value-added resellers (VARs), original equipment manufacturers (OEMs), and also end-users of said digital image capture and processing system;
wherein multiple pieces of third-party product code that have been plugged into said set of place holders, operate to extend the features and functions of said digital image capture and processing system, and modify the standard behavior of said digital image capture and processing system into a custom behavior for said digital image capture and processing system;
wherein said external host computer system, operated by said third-party, is interfaced with said input/output subsystem so as to (i) load said multiple pieces of third-party product code into said memory, and (ii) plug said multiple pieces of third-party product code into said set of place holders, and extend the features and functions of said digital image capture and processing system, and modify the standard behavior of said digital image capture and processing system into said custom behavior for said digital image capture and processing system, without permanently modifying the standard features and functions of said digital image capture and processing system; and
wherein said multiple pieces of third-party code includes a configuration file having conditional programming logic that controls the ordering or chaining of said multiple plug-ins in said digital image capture and processing system.

7. The digital image capture and processing system of claim 6, which further comprises a housing having a light transmission window; wherein said FOV is projected through said light transmission window and upon the object to be imaged in said FOV; and wherein said housing contains said subsystems.

8. The digital image capture and processing system of claim 6, wherein said multiple pieces of original product code and said third-party product code each comprises executable binary code, maintained in one or more libraries.

9. The digital image capture and processing system of claim 6, wherein an end-user, such as a value-added reseller (VAR) or original equipment manufacturer (OEM), can write said one or more pieces of third-party product code according to specifications set by said original system designers.

10. The digital image capture and processing system of claim 6, which is integrated or embodied into a third-party product selected from the group consisting of image-processing based bar code symbol reading systems, portable data terminals (PDTs), mobile phones, computer mice-type devices, personal computers, keyboards, consumer appliances, automobiles, ATMs, vending machines, reverse-vending machines, retail POS-based transaction systems, 1D or 2D digitizers, CAT scanning systems, automobile identification systems, package inspection systems, and personal identification systems; and wherein said digital image processing subsystem processes said 2D digital image so as to extract data from said 2D digital image for bar code reading, font recognition, mark recognition, pattern recognition, and/or color matching.

## Patentansprüche

1. Verfahren zum Ändern und/oder Erweitern der Standardeigenschaften und -funktionen eines digitalen Bildaufnahme- und Bildverarbeitungssystems, wobei das Verfahren die folgenden Schritte umfasst:
(a) Bereitstellen des digitalen Bildaufnahme- und Bildverarbeitungssystems mit einer Gruppe von Standardeigenschaften und -funktionen und einer Computerplattform, die enthält: (i) einen Speicher (37) zum Speichern von Teilen eines Originalproduktcodes, der durch die Originaldesigner der digitalen Bildaufnahme- und Bildverarbeitungsvorrichtung geschrieben wurde, und (ii) einen Mikroprozessor (36) zum Ausführen einer oder mehrerer Anwendungen durch Aufrufen und Ausführen von Teilen des Originalproduktcodes in einer bestimmten Folge, um die Gruppe von Standardeigenschaften und -funktionen, die ein Standardverhalten des digitalen Bildaufnahme- und Bildverarbeitungssystems charakterisieren, zu unterstützen,
wobei der eine oder die mehreren Teile des Originalproduktcodes eine Gruppe von Platzhaltern besitzen, in die ein Produktcode von einem Dritten durch einen Dritten einschließlich Value-Added-Reseller (VARs), Originalhersteller (OEMs) und auch Endanwender des digitalen Bildaufnahme- und Bildverarbeitungssystems eingefügt oder eingesteckt werden kann; und
(b) Einstecken von mehreren Teilen eines Codes eines Dritten in die Gruppe von Platzhaltern, um zu bewirken, die Eigenschaften und die Funktionen des digitalen Bildaufnahme- und Bildverarbeitungssystems zu ändern und/oder zu erweitern und dadurch das Standardverhalten des digitalen Bildaufnahme- und Bildverarbeitungssystems in ein kundenspezifisches Verhalten für das digitale Bildaufnahme- und Bildverarbeitungssystem (16) zu ändern;
wobei die mehreren Teile des Codes eines Dritten eine Konfigurationsdatei mit einer bedingten Programmierlogik enthalten, die die Reihenfolge oder eine Verkettung der mehreren Einsteckelemente in dem digitalen Bildaufnahme- und Bildverarbeitungssystem (16) steuert.

2. Verfahren nach Anspruch 1, wobei der eine oder die mehreren Teile des Originalproduktcodes und des Produktcodes eines Dritten ausführbaren Binärcode umfassen, der in einer oder mehreren Bibliotheken unterhalten wird; und wobei der Speicher eine Speicherarchitektur mit verschiedenen Arten von Speichern umfasst, von denen jeder eine unterschiedliche Zugriffsgeschwindigkeit und unterschiedliche Leistungseigenschaften besitzt.

3. Verfahren nach Anspruch 1, wobei der Schritt (b) ferner umfasst, dass ein Endanwender oder ein Dritter, wie etwa ein Value-Added-Reseller (VAR) oder ein Originalhersteller (OEM) die mehreren Teile des Codes eines Dritten gemäß Spezifikationen schreibt, die durch die Originalsystemdesigner eingestellt wurden.

4. Verfahren nach Anspruch 1, wobei der Schritt (a) ferner umfasst, das digitale Bildaufnahme- und Bildverarbeitungssystem in ein Produkt eines Dritten zu integrieren oder einzuschließen, die aus der Gruppe ausgewählt ist, die aus Barcode-Symbollesesystemen (1), tragbaren Datenendgeräten (PDTs), Mobiltelefonen, computermausartigen Vorrichtungen, Personalcomputern, Tastaturen, Verbraucheranwendungen, Automobilen, ATMs, Verkaufsautomaten, Leergutautomaten, POS-basierten Einzelhandelstransaktionssystemen, 2D- oder 2D-Digitalumsetzern und CAT-Abtastsystemen, Automobilerkennungssystemen, Verpackungsinspektionssystemen und Personalerkennungssystemen besteht.

5. Verfahren nach Anspruch 1, das ferner nach dem Schritt (b) umfasst, dass ein Endanwender das digitale Bildaufnahme- und Bildverarbeitungssystem verwendet, um ein oder mehrere digitale Bilder eines Objektes mit dem digitalen Kamerauntersystem zu erzeugen und zu detektieren und wobei das digitale Bildverarbeitungsuntersystem das eine oder die mehreren digitalen Bilder verarbeitet, um Daten aus dem einen oder den mehreren digitalen Bildern für ein Barcode-Lesen, eine Schrifterkennung, eine Zeichenerkennung, eine Mustererkennung und/oder eine Farbabstimmung zu extrahieren.

6. Digitales Bildaufnahme- und Bildverarbeitungssystem mit einer Gruppe von Standardeigenschaften und -funktionen und einer Gruppe von kundenspezifischen Eigenschaften und Funktionen, die kundenspezifische Endanwenderanwendungsbedürfnisse erfüllen, wobei das digitale Bildaufnahme- und Bildverarbeitungssystem Folgendes umfasst:
ein digitales Kamerauntersystem, um ein Sichtfeld (FOV) auf ein abzubildendes Objekt in dem FOV zu projizieren und abgebildetes Licht, das von dem Objekt während der Beleuchtungsvorgänge in einem Bildaufnahmemodus, in dem ein oder mehrere digitale Bilder des Objektes durch das digitale Kamerauntersystem erzeugt und detektiert werden, zurückreflektiert wird, zu detektieren;
ein digitales Bildverarbeitungsuntersystem zum Verarbeiten des einen oder der mehreren digitalen Bilder und Erzeugen von Rohdaten oder verarbeiteten Daten oder Erkennen oder Erfassen von Informationen, die in dem einen oder den mehreren Bildern graphisch dargestellt sind, und Erzeugen von Ausgabedaten, die die erkannten Informationen repräsentieren;
ein Eingabe-/Ausgabeuntersystem zum Senden der Ausgabedaten an ein externes Host-System oder eine andere Informationen empfangende oder auf Informationen reagierende Vorrichtung;
ein Systemsteueruntersystem zum Steuern und/oder Koordinieren des Betriebs der obigen Untersysteme; und
eine Computerplattform zum Unterstützen der Umsetzung des einen oder der mehreren obigen Untersysteme und der Eigenschaften und Funktionen des digitalen Bildaufnahme- und Bildverarbeitungssystems;
wobei die Computerplattform (i) einen Speicher zum Speichern von mehreren Teilen des Originalproduktcodes, der durch die Originaldesigner des digitalen Bildaufnahme- und Bildverarbeitungssystems geschrieben wurde, und (ii) einen Mikroprozessor für das Ausführen von einer oder mehreren Anwendungen durch Aufrufen und Ausführen von Teilen des Originalproduktcodes in einer bestimmten Folge enthält, um eine Gruppe von Standardeigenschaften und -funktionen zu unterstützen, die ein Standardverhalten des digitalen Bildaufnahme- und Bildverarbeitungssystems charakterisieren;
wobei die mehreren Teile des Originalproduktcodes eine Gruppe von Platzhaltern besitzen, in die mehrere Teile eines Produktcodes eines Dritten durch einen Dritten einschließlich Value-Added-Reseller (VARs), Originalhersteller (OEMs) und auch Endanwender des digitalen Bildaufnahme- und Bildverarbeitungssystems eingefügt oder eingesteckt werden können;
wobei mehrere Teile des Produktcodes eines Dritten, die in die Gruppe von Platzhaltern eingesteckt werden, bewirken, die Eigenschaften und Funktionen des digitalen Bildaufnahme- und Bildverarbeitungssystems zu erweitern und das Standardverhalten des digitalen Bildaufnahme- und Bildverarbeitungssystems in ein kundenspezifisches Verhalten für das digitale Bildaufnahme- und Bildverarbeitungssystem zu ändern;
wobei das externe Host-Computersystem, das durch einen Dritten betrieben wird, mit dem Eingabe-/Ausgabeuntersystem über eine Schnittstelle verbunden ist, um (i) mehrere Teile von Produktcode eines Dritten in den Speicher zu laden, und (ii) die mehreren Teile des Produktcodes eines Dritten in die Gruppe der Platzhalter einzustecken und die Eigenschaften und Funktionen des digitalen Bildaufnahme- und Bildverarbeitungssystems zu erweitern und das Standardverhalten des digitalen Bildaufnahme- und Bildverarbeitungssystems in das kundenspezifische Verhalten des digitalen Bildaufnahme- und Bildverarbeitungssystems zu ändern, ohne die Standardeigenschaften und -funktionen des digitalen Bildaufnahme- und Bildverarbeitungssystems permanent zu ändern; und
wobei die mehreren Teile des Codes eines Dritten eine Konfigurationsdatei mit einer bedingten Programmierlogik enthalten, die die Reihenfolge oder die Verkettung der mehreren Einsteckelemente in dem digitalen Bildaufnahme- und Bildverarbeitungssystem steuert.

7. Digitales Bildaufnahme- und Bildverarbeitungssystem nach Anspruch 6, das ferner ein Gehäuse mit einem Lichtdurchlassfenster umfasst; wobei das FOV durch das Lichtdurchlassfenster und auf das abzubildende Objekt in dem FOV projiziert wird; und wobei das Gehäuse die Untersysteme enthält.

8. Digitales Bildaufnahme- und Bildverarbeitungssystem nach Anspruch 6, wobei die mehreren Teile des Originalproduktcodes und des Produktcodes eines Dritten jeweils einen ausführbaren Binärcode umfassen, der in einer oder in mehreren Bibliotheken unterhalten wird.

9. Digitales Bildaufnahme- und Bildverarbeitungssystem nach Anspruch 6, wobei ein Endanwender, wie etwa ein Value-Added-Reseller (VAR) oder ein Originalhersteller (OEM) einen oder mehrere Teile des Produktcodes eines Dritten gemäß der durch die Originalsystemdesigner eingestellten Spezifikationen schreiben kann.

10. Digitales Bildaufnahme- und Bildverarbeitungssystem nach Anspruch 6, das in einem Produkt eines Dritten integriert oder enthalten ist, das aus der Gruppe ausgewählt ist, die aus Barcode-Symbollesesystemen, tragbaren Datenendgeräten (PDTs), Mobiltelefonen, computermausartigen Vorrichtungen, Personalcomputern, Tastaturen, Verbraucheranwendungen, Automobilen, ATMs, Verkaufsautomaten, Leergutautomaten, POS-basierten Einzelhandelstransaktionssystemen, 1D-oder 2D-Digitalumsetzern, CAT-Abtastsystemen, Automobilerkennungssystemen, Verpackungsinspektionssystemen und Personalerkennungssystemen besteht; und wobei das digitale Bildverarbeitungsuntersystem das digitale 2D-Bild verarbeitet, um Daten aus dem digitalen 2D-Bild für ein Barcode-Lesen, eine Schrifterkennung, eine Zeichenerkennung, eine Mustererkennung und/oder eine Farbabstimmung zu extrahieren.

## Revendications

1. Procédé de modification et/ou d'extension des caractéristiques et fonctions standard d'un système de capture et de traitement d'image numérique, ledit procédé comprenant les étapes consistant à :
(a) fournir ledit système de capture et de traitement d'image numérique ayant un ensemble de caractéristiques et fonctions standard, et une plate-forme informatique comportant (i) une mémoire (37) pour mémoriser des morceaux de code produit d'origine écrits par les concepteurs d'origine dudit système de capture et de traitement d'image numérique, et (ii) un microprocesseur (36) pour exécuter une ou plusieurs applications en appelant et exécutant des morceaux dudit code produit d'origine dans une séquence particulière, de manière à supporter ledit ensemble de caractéristiques et fonctions standard qui caractérisent un comportement standard dudit système de capture et de traitement d'image numérique,
dans lequel lesdits un ou plusieurs morceaux de code produit d'origine ont un ensemble de paramètres fictifs dans lesquels un code produit tiers peut être inséré ou introduit par des tierces parties, dont des revendeurs à valeur ajoutée (VAR), des constructeurs d'origine (OEM), ainsi que les utilisateurs finals dudit système de capture et de traitement d'image numérique ; et
(b) insérer de multiples morceaux de code produit tiers dans ledit ensemble de paramètres fictifs, de façon à fonctionner pour modifier et/ou étendre les caractéristiques et fonctions dudit système de capture et de traitement d'image numérique, et ainsi modifier ou étendre le comportement standard dudit système de capture et de traitement d'image numérique en un comportement personnalisé dudit système de capture et de traitement d'image numérique (16) ;
dans lequel lesdits multiples morceaux de code produit tiers comportent un fichier de configuration ayant une logique de programmation conditionnelle qui commande l'ordre ou le chaînage desdits multiples modules d'extension dans ledit système de capture et de traitement d'image numérique (16).

2. Procédé selon la revendication 1, dans lequel lesdits un ou plusieurs morceaux de code produit d'origine et ledit code produit tiers comprennent un code binaire exécutable tenu à jour dans une ou plusieurs bibliothèques ; et dans lequel ladite mémoire comprend une architecture de mémoire ayant différents types de mémoire, chacun ayant des caractéristiques de vitesse d'accès et de performance différentes.

3. Procédé selon la revendication 1, dans lequel l'étape (b) comprend en outre l'écriture par un utilisateur final ou une tierce partie, dont un revendeur à valeur ajoutée (VAR), ou un constructeur d'origine (OEM), desdits multiples morceaux de code produit tiers en fonction de spécifications établies par lesdits concepteurs d'origine du système.

4. Procédé selon la revendication 1, dans lequel l'étape (a) comprend en outre l'intégration ou la mise en oeuvre dudit système de capture et de traitement d'image numérique dans un produit tiers sélectionné dans le groupe consistant en systèmes de lecture de symboles de code barres (1), terminaux de données portables (PDT), téléphones mobiles, dispositifs du type souris d'ordinateur, ordinateurs individuels, claviers, appareils domestiques, automobiles, guichets automatiques bancaires, distributeurs, récupératrices automatiques de déchets, systèmes de transaction de points de vente de détaillants, numériseurs 2D ou 2D, et systèmes de balayage CAT, systèmes d'identification d'automobiles, systèmes d'inspection de colis, et systèmes d'identification personnelle reposant sur le traitement d'image.

5. Procédé selon la revendication 1, lequel comprend en outre après l'étape (b), l'utilisation par un utilisateur final dudit système de capture et de traitement d'image numérique pour former et détecter une ou plusieurs images numériques d'un objet avec ledit sous-système de caméra numérique, et dans lequel ledit sous-système de traitement d'image numérique traite lesdites une ou plusieurs images numériques de manière à extraire des données desdites une ou plusieurs images numériques en vue d'une lecture de code barres, d'une reconnaissance de police de caractères, d'une reconnaissance de marques, d'une reconnaissance de formes, et/ou d'une correspondance de couleur.

6. Système de capture et de traitement d'image numérique comportant un ensemble de caractéristiques et de fonctions standard, et un ensemble de caractéristiques et de fonctions personnalisées qui satisfont des exigences d'application personnalisée d'un utilisateur final, ledit système de capture et de traitement d'image numérique comprenant:
un sous-système de caméra numérique pour projeter un champ de vision (FOV) sur un objet à imager dans ledit FOV, et détecter une lumière imagée réfléchie par l'objet durant des opérations d'illumination dans un mode de capture d'image dans lequel une ou plusieurs images numériques de l'objet sont formées et détectées par ledit sous-système de caméra numérique ;
un sous-système de traitement d'image numérique pour traiter lesdites une ou plusieurs images numériques et produire des données brutes ou traitées, ou reconnaître ou acquérir des informations représentées graphiquement dans lesdites une ou plusieurs images numériques, et
produire des données de sortie représentatives desdites informations reconnues ;
un sous-système d'entrée/sortie pour transmettre lesdites données de sortie à un système hôte externe ou
autre dispositif récepteur d'informations ou répondant à des informations ;
un sous-système de commande de système pour commander et/ou coordonner le fonctionnement desdits sous-système ci-dessus ; et
une plate-forme informatique pour supporter la mise en oeuvre d'un ou plusieurs desdits sous-systèmes ci-dessus, et les caractéristiques et fonctions dudit système de capture et de traitement d'image numérique ;
ladite plate-forme informatique comportant (i) une mémoire pour mémoriser de multiples morceaux de code produit d'origine écrits par les concepteurs d'origine dudit système de capture et de traitement d'image numérique, et (ii) un microprocesseur pour exécuter une ou plusieurs applications en appelant et exécutant des morceaux dudit code produit d'origine dans une séquence particulière, de manière à supporter un ensemble de caractéristiques et fonctions standard qui caractérisent un comportement standard dudit système de capture et de traitement d'image numérique ;
dans lequel lesdits un ou plusieurs morceaux de code produit d'origine ont un ensemble de paramètres fictifs dans lesquels de multiples morceaux d'un code produit tiers peuvent être insérés ou introduits par des tierces parties, dont des revendeurs à valeur ajoutée (VAR), des constructeurs d'origine (OEM), et également les utilisateurs finals dudit système de capture et de traitement d'image numérique ; et
dans lequel les multiples morceaux de code produit tiers qui ont été insérés dans ledit ensemble de paramètres fictifs servent à étendre les caractéristiques et fonctions dudit système de capture et de traitement d'image numérique, et à modifier le comportement standard dudit système de capture et de traitement d'image numérique en un comportement personnalisé dudit système de capture et de traitement d'image numérique ;
dans lequel le système informatique hôte externe,
exploité par ladite tierce partie, est interfacé avec ledit sous-système d'entrée/sortie de manière à (i) charger lesdits multiples morceaux du code produit tiers dans ladite mémoire et (ii) insérer lesdits multiples morceaux du code produit tiers dans ledit ensemble de paramètres fictifs, et étendre les caractéristiques et fonctions dudit système de capture et de traitement d'image numérique, et modifier le comportement standard dudit système de capture et de traitement d'image numérique en ledit comportement personnalisé dudit système de capture et de traitement d'image numérique, sans modifier définitivement les caractéristiques et fonctions standard dudit système de capture et de traitement d'image numérique ; et
dans lequel lesdits multiples morceaux de code produit tiers comportent un fichier de configuration ayant une logique de programmation conditionnelle qui commande l'ordre ou le chaînage desdits multiples modules d'extension dans ledit système de capture et de traitement d'image numérique.

7. Système de capture et de traitement d'image numérique selon la revendication 6, lequel comporte en outre un boîtier présentant une fenêtre de transmission de lumière ; dans lequel le FOV est projeté à travers ladite fenêtre de transmission de lumière et sur l'objet à imager dans ledit FOV ; et dans lequel ledit boîtier contient lesdits sous-systèmes.

8. Système de capture et de traitement d'image numérique selon la revendication 6, dans lequel lesdits multiples morceaux de code produit d'origine et ledit code produit tiers comprennent un code binaire exécutable tenu à jour dans une ou plusieurs bibliothèques.

9. Système de capture et de traitement d'image numérique selon la revendication 6, dans lequel un utilisateur final, tel qu'un revendeur à valeur ajoutée (VAR), ou un constructeur d'origine (OEM), peut écrire lesdits un ou plusieurs morceaux de code produit tiers en fonction de spécifications établies par les concepteurs d'origine du système.

10. Système de capture et de traitement d'image numérique selon la revendication 6, lequel est intégré ou mis en oeuvre dans un produit tiers sélectionné dans le groupe consistant en systèmes de lecture de symboles de code barres, terminaux de données portables (PDT), téléphones mobiles, dispositifs du type souris d'ordinateur, ordinateurs individuels, claviers, appareils domestiques, automobiles, guichets automatiques bancaires, distributeurs, récupératrices automatiques de déchets, systèmes de transaction de points de vente de détaillants, numériseurs 1D ou 2D, et systèmes de balayage CAT, systèmes d'identification d'automobiles, systèmes d'inspection de colis, et systèmes d'identification personnelle reposant sur le traitement d'image ; et dans lequel ledit sous-système de traitement d'image numérique traite ladite image numérique 2D de manière à extraire des données de ladite image 2D pour une lecture de code barres, reconnaissance de police de caractères, reconnaissance de marques, reconnaissance de formes, et/ou correspondance de couleur.
